# EUROPEAN PATENT APPLICATION

(11) **EP 3 064 107 A1**
(43) Date of publication of application: **07.09.2016**
(21) Application number: 16157739.0
(22) Date of filing: 26.02.2016
(51) Int. Cl.: A47J 43/046, A47J 43/07, G01G 3/14, G01G 19/52

(54) **HIGH SPEED BLENDER/SMOOTHIE MACHINE**

(30) Priority: 04.03.2015 US 201562128079 P; 18.02.2016 US 201615047200
(71) Applicant: Whirlpool Corporation, Benton Harbor, MI 49022 (US)
(72) Inventor: Altenritter, Daniel A., 21025 Comerio (IT); Chandrashekaran, Arivazhagan, 21025 Comerio (IT); Conard, Wayne W., 21025 Comerio (IT); Haney, Edward, 21025 Comerio (IT); Kettle, Everett, 21025 Comerio (IT); Mock, Brandon T., 21025 Comerio (IT); Paget, Paul S., 21025 Comerio (IT); Snyder, Joseph, 21025 Comerio (IT)
(74) Representative: Guerci, Alessandro

(57) **Abstract**

A kitchen appliance (510) includes a housing (12), a container seat (20) disposed proximate an upper portion (22) of the housing (12), and a container (30) defining a processing chamber (32). The container (30) has a base (34) that matingly engages the container seat (20). A weight scale (250) is disposed within the container seat (20), wherein engagement of the container (30) with a portion of the container seat (20) places the container (30) in communication with the weight scale (250).

## Description

### BACKGROUND

The present invention generally relates to food processing appliances, and more specifically, to a food processing appliance having a high speed blending and/or smoothie making capability.

### SUMMARY

In at least one aspect, a kitchen appliance includes a housing, a container seat disposed proximate an upper portion of the housing, and a container defining a processing chamber. The container has a base that matingly engages the container seat. A scale is disposed within the container seat, wherein engagement of the container with a portion of the container seat places the container in communication with the scale.

In at least another aspect, a scale for a kitchen appliance includes a container seat adapted to receive a container having a processing chamber. An electrical sensor is disposed within the container seat and is in selective communication with an electrical current. When the container is disposed in the container seat, a deflecting portion receives a downward force from the container to define a deflected position of the deflecting portion. The deflected position defines a modification of the electrical current to define a modified electrical output that corresponds to the downward force.

In at least another aspect, a high speed food processing appliance includes a housing having a rotational coupler and a motor disposed within an interior volume defined by the housing. The motor is in rotational communication with the rotational coupler. A container seat is disposed proximate an upper portion of the housing, the container seat having a perimetrical collar wall and a lower pad that define a collar recess. The rotational coupler is disposed within the lower pad and in operable communication with the collar recess. A container defines a processing chamber, the container having a base that matingly engages the perimetrical collar wall to define a processing position, wherein the processing position is further defined by the perimetrical collar wall extending around at least a portion of the base. A weight scale is disposed within the container seat. The weight scale is in communication with the container in the processing position. A blade assembly has a processing blade and a blade coupler, wherein the blade coupler is in operable communication with the processing blade and the base of the container, and wherein the processing position is further defined by the blade coupler in communication with the rotational coupler such that the motor is in operable communication with the processing blade and the processing chamber.

These and other features, advantages, and objects of the present device will be further understood and appreciated by those skilled in the art upon studying the following specification, claims, and appended drawings.

### BRIEF DESCRIPTION OF THE DRAWINGS

In the drawings:
FIG. 1 is a front perspective view of a food processing appliance;
FIG. 2 is a rear perspective view of the food processing appliance of FIG. 1;
FIG. 3 is a first side elevational view of the food processing appliance of FIG. 1;
FIG. 4 is a second side elevational view of the food processing appliance of FIG. 1;
FIG. 5 is a third side elevational view of the food processing appliance of FIG. 1;
FIG. 6 is a fourth side elevational view of the food processing appliance of FIG. 1;
FIG. 7 is a top plan view of the food processing appliance of FIG. 1;
FIG. 8 is a bottom plan view of the food processing appliance of FIG. 1;
FIG. 9 is a cross-sectional view of the food processing appliance of FIG. 7 taken along line IX-IX;
FIG. 10 is a cross-sectional view of the food processing appliance of FIG. 7 taken along line X-X;
FIG. 11 is an exploded perspective view of the food processing appliance of FIG. 1;
FIG. 12 is a front perspective view of a housing of an aspect of the food processing appliance with the container removed;
FIG. 13 is a side perspective view of a container and blade assembly for a food processing appliance;
FIG. 14 is a perspective view of an aspect of a blade assembly for a food processing appliance;
FIG. 15 is a partially exploded top perspective view of a container lid for a food processing appliance;
FIG. 16 is a top plan view of a lid for a food processing appliance with the central cap removed;
FIG. 17 is a cross-sectional view of the lid of FIG. 16 taken along line XVII-XVII;
FIG. 18 is an enlarged cross-sectional view of the lid of FIG. 17 taken at area XVIII;
FIG. 19 is a cross-sectional view of an aspect of a dual wall container for a food processing appliance;
FIG. 20 is a bottom perspective view of a central cap for a food processing appliance incorporating an aspect of a lid airflow venting system;
FIG. 21 is a side perspective view of a container for a food processing appliance incorporating an aspect of a lid airflow venting system;
FIG. 22 is a rear perspective view of an aspect of a food processing appliance incorporating a cord wrap cleat;
FIG. 23 is a front perspective view of a smoothie blender incorporating an upper enclosure;
FIG. 24 is a side elevational view of the smoothie blender of FIG. 23;
FIG. 25 is a rear perspective view of an aspect of a smoothie blender;
FIG. 26 is a front perspective view of the smoothie blender of FIG. 23 with a front lid of the upper enclosure in an open position;
FIG. 27 is a top perspective view of an aspect of the smoothie blender with a front lid of the upper enclosure in the closed position;
FIG. 28 is a rear perspective view of the smoothie blender of FIG. 27 with the front lid of the upper enclosure in the open position;
FIG. 29 is a top perspective view of a housing for an aspect of the smoothie blender with the upper enclosure and container removed;
FIG. 30 is a front perspective view of an aspect of a user interface for a smoothie blender;
FIG. 31 is a front elevational view of an aspect of a user interface for a food processing appliance;
FIG. 32 is a front elevational view of an aspect of a user interface for the food processing appliance;
FIG. 33 is a front perspective view of an aspect of a user interface for a food processing appliance;
FIG. 34 is a top perspective view of an aspect of a container seat for a food processing appliance;
FIG. 35 is a cross-sectional view of the container seat of FIG. 34 taken along line XXXV-XXXV;
FIG. 36 is an exploded perspective view of the container seat of FIG. 34;
FIG. 37 is a top perspective view of an aspect of a container seat for a food processing appliance;
FIG. 38 is a cross-sectional view of the container seat of FIG. 37 taken along line XXXVIII-XXXVIII;
FIG. 39 is a top perspective view of the container seat of FIG. 37 with a container disposed in a weighing position;
FIG. 40 is a top plan view of an aspect of an electrical sensor for a weight scale of a food processing appliance;
FIG. 41 is a cross-sectional view of the electrical sensor of FIG. 40 taken along line XLI-XLI;
FIG. 42 is a cross-sectional view of the electrical sensor of FIG. 41 showing the electrical sensor in a deflected position;
FIG. 43 is a top perspective view of an aspect of a container seat for a food processing appliance;
FIG. 44 is a bottom perspective view of the container seat of FIG. 43;
FIG. 45 is a cross-sectional view of the container seat of FIG. 43 taken along line XLV-XLV;
FIG. 46 is a cross-sectional view of the container seat of FIG. 43 taken along line XLVI-XLVI;
FIG. 47 is an exploded perspective view of the container seat of FIG. 43;
FIG. 48 is a side elevational view of an aspect of a container seat illustrating a scale engagement mechanism in a processing position; and
FIG. 49 is a side elevational view of the scale engagement mechanism of FIG. 48 shown in a weighing position.

### DETAILED DESCRIPTION OF EMBODIMENTS

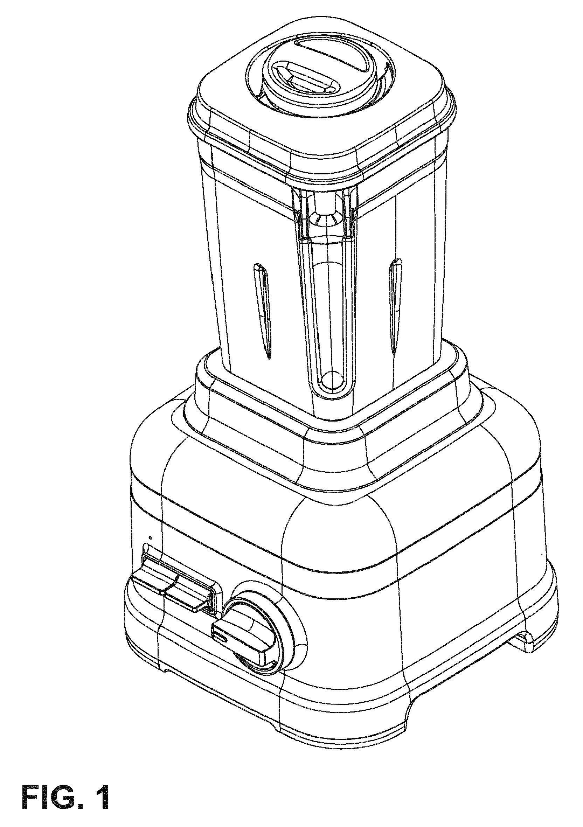

For purposes of description herein the terms "upper," "lower," "right," "left," "rear," "front," "vertical," "horizontal," and derivatives thereof shall relate to the device as oriented in FIG. 1. However, it is to be understood that the device may assume various alternative orientations and step sequences, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

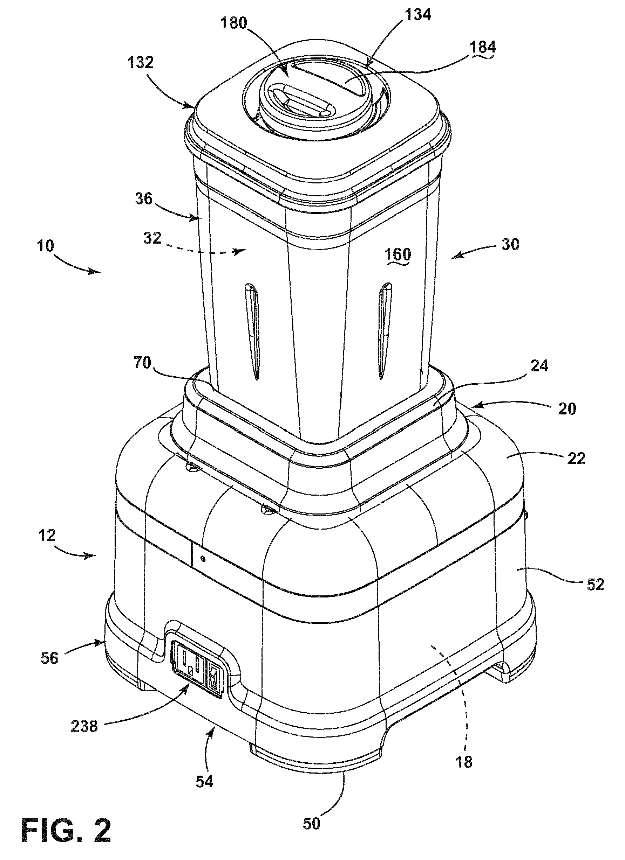

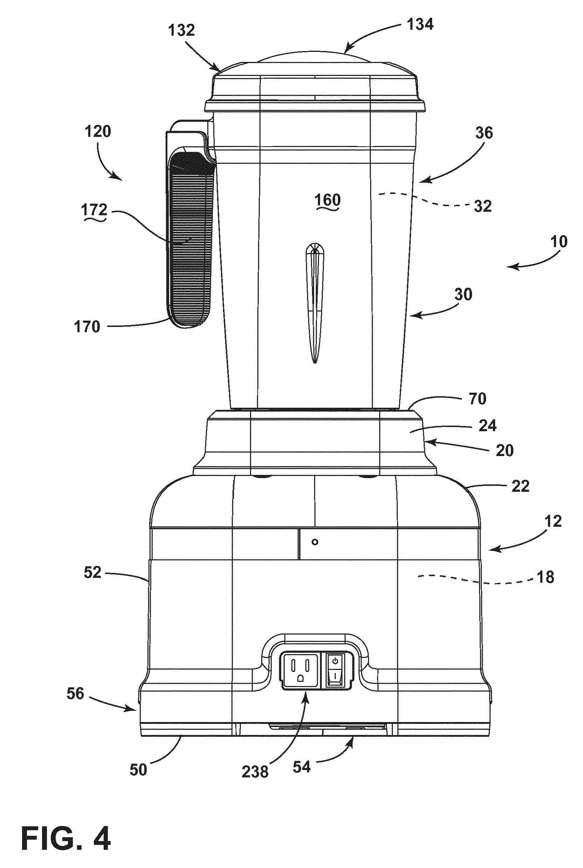

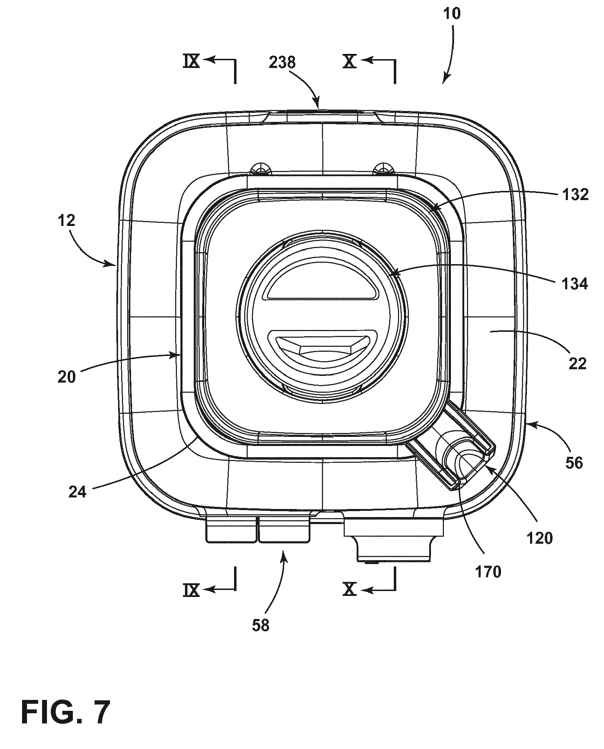

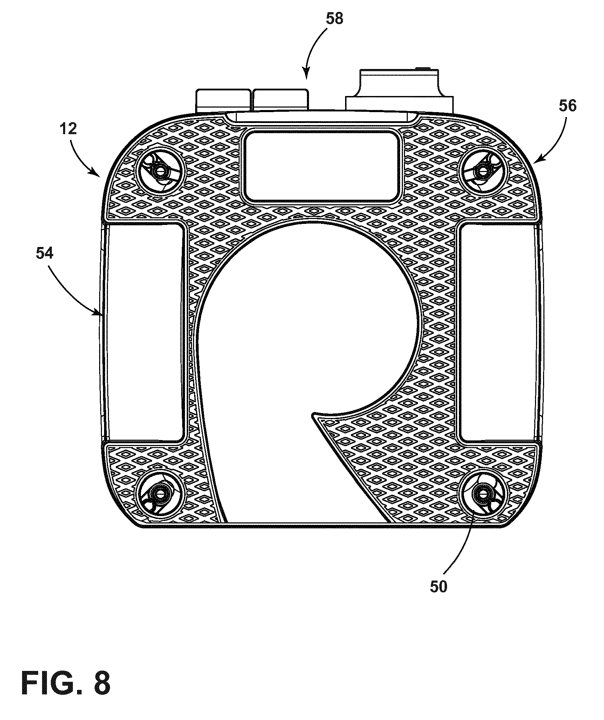

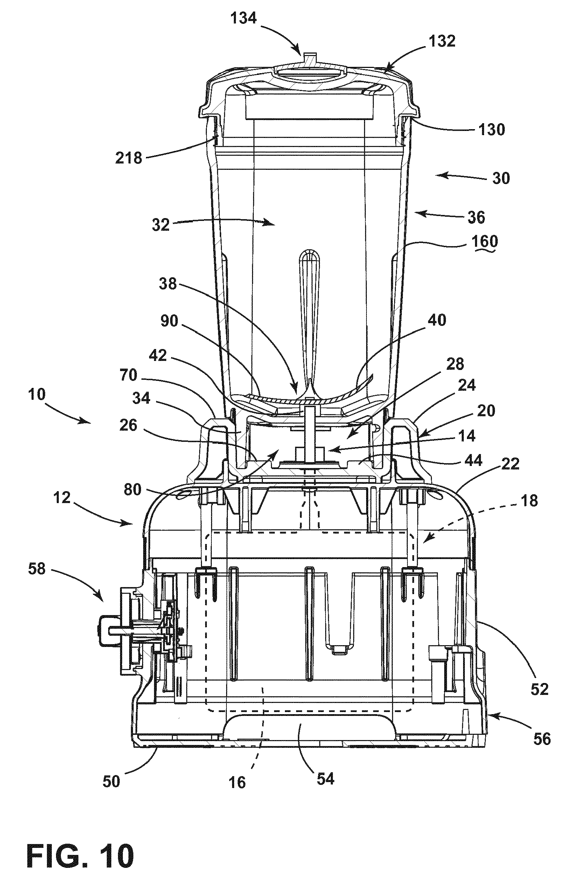

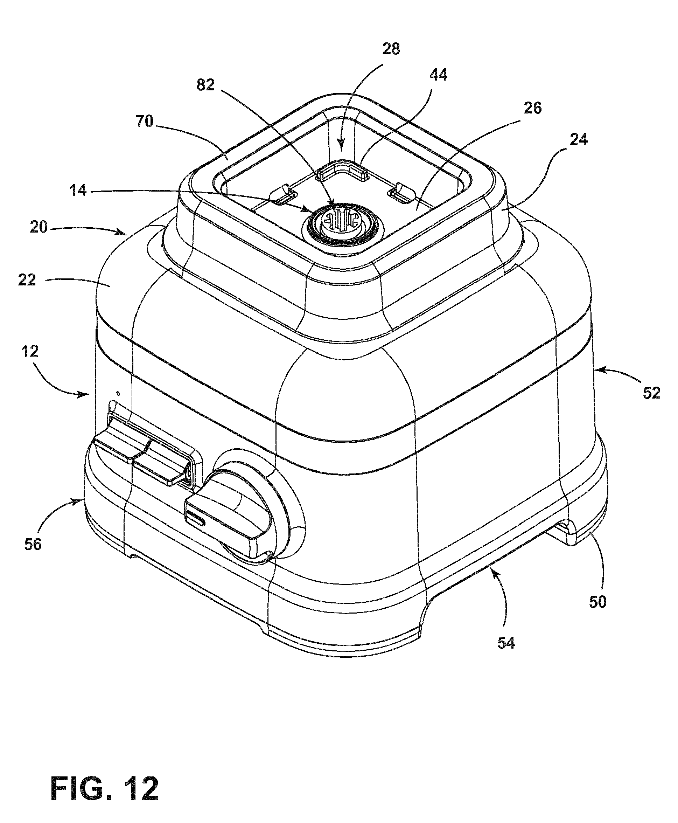

As illustrated in FIGS. 1-12, reference numeral 10 generally refers to a food processing appliance, according to one embodiment. The food processing appliance 10, which can be a high-speed food processing appliance, includes a housing 12 having a rotational coupler 14. A motor 16 is disposed within an interior volume 18 defined by the housing 12, where the motor 16 is in rotational communication with the rotational coupler 14. A container seat 20 is disposed proximate an upper portion 22 of the housing 12, where the container seat 20 includes a perimetrical collar wall 24 and a lower pad 26 that define a collar recess 28. The rotational coupler 14 is disposed within the lower pad 26 and is in operable communication with the collar recess 28. A container 30 is included which defines a processing chamber 32 within the container 30. The container 30 includes a base 34 that matingly engages the perimetrical collar wall 24 to define a processing position 36. The processing position 36 of the container 30 is further defined by the perimetrical collar wall 24 extending around at least a portion of the base 34 of the container 30. A blade assembly 38 is configured to be engaged with the container 30, where the blade assembly 38 includes a processing blade 40 and a blade coupler 42. The blade coupler 42 is in operable communication with the processing blade 40 and the base 34 of the container 30. The processing position 36 of the container 30 is further defined by the blade coupler 42 being in communication with the rotational coupler 14 within the collar recess 28, such that the motor 16 is in operable communication with the processing blade 40 and the processing chamber 32.

Referring again to FIGS. 1-12, the base 34 of the food processing appliance 10 can include a substantially cuboidal prism shape having a plurality of feet 50 that support the housing 12 and the food processing appliance 10. The housing 12 can include an outer shell 52 that substantially encases the motor 16 and other mechanical aspects of the food processing appliance 10. The housing 12 can also include an inner base 54 that forms at least a portion of the lower region 56 of the housing 12 and at least a portion of the feet 50 of the housing 12. It is contemplated that the motor 16 can be coupled to a portion of the inner base 54 of the housing 12 in order to secure the motor 16 within the interior volume 18 of the housing 12. It is also contemplated that the housing 12 can include an appliance control 58 that is in operable communication with the motor 16 of the food processing appliance 10 and also a power supply that delivers electrical current to the motor 16 and other electrical mechanisms of the food processing appliance 10. The various aspects of the appliance control 58 will be discussed in further detail below.

According to the various embodiments, the housing 12 can include various geometric configurations that can include, but are not limited to, cuboidal, cylindrical, hemispheric, arcuate, prism-shaped, polygonal prism-shaped, irregularly shaped, and other various configurations.

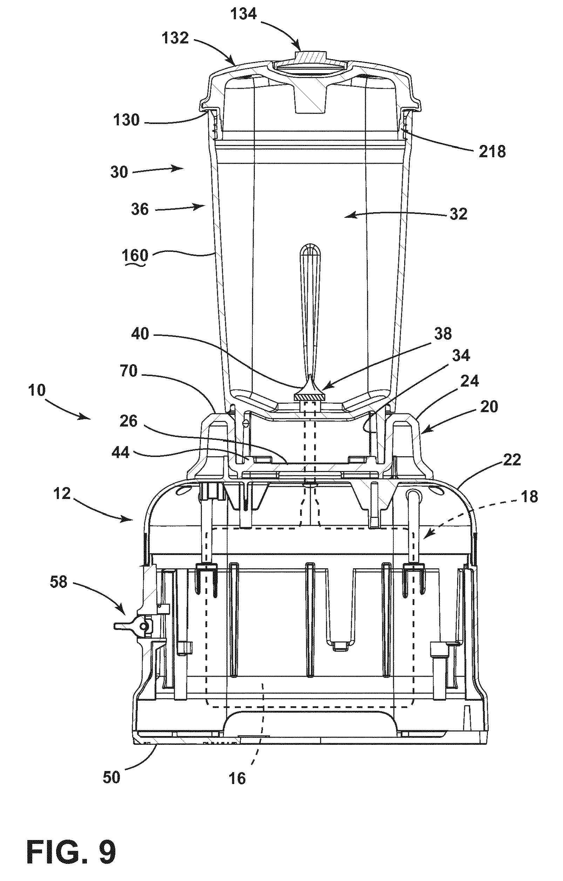

Referring again to the various embodiments illustrated in FIGS. 9-12, the container seat 20 disposed within an upper portion 22 of the housing 12 can include a rectangular perimetrical collar wall 24 that is configured to receive the base 34 of the container 30. It is contemplated that the shape of the perimetrical collar wall 24 will substantially match the shape of the base 34 of the container 30 such that the base 34 of the container 30 can be matingly engaged within the perimetrical collar wall 24. According to the various embodiments, the perimetrical collar wall 24 and the various portions of the container seat 20 can be made of an acoustic dampening material that is configured to reduce the amount of sound emanating from the food processing appliance 10 as a result of the operation of the motor 16 of the food processing appliance 10. According to various aspects, the container seat 20 can be made of various flexible and sound absorbing materials that can include, but are not limited to, rubber, silicone, vinyl, plastic, polymers, combinations thereof and other various sound absorbing materials. It is also contemplated that the perimetrical collar wall 24 can be made of a substantially rigid material that is coated by one or more of the above-listed sound-absorbing materials. It is contemplated that the perimetrical collar wall 24 can be made of metal, plastic, ceramic, or other similar rigid material that is coated with a substantially acoustical absorbing material substantially similar to that described above.

Referring again to FIGS. 9-12, in addition to providing acoustical absorbing properties, the material of the perimetrical collar wall 24 can be substantially flexible in order to absorb various vibrations that may be transferred to the container 30 as a result of the operation of the motor 16. In this manner, substantially flexible material of the perimetrical collar wall 24 can serve as a sound-absorbing material and vibration-absorbing material that receives and absorbs sound from the motor 16 and also vibrations from the motor 16 and the container 30 during operation of the food processing appliance 10. The container seat 20 can also include inner curb portions 44 that contain a portion of the base 34 of the container 30. In this manner, a portion of the base 34 can be retained on both sides between the inner curb portions 44 and the perimetrical collar wall 24. Based upon this configuration, a close engagement between the base 34 of the container 30 within the collar recess 28 defined by the perimetrical collar wall 24 can provide a substantially secure connection between the container 30 and the container seat 20 that can substantially minimize sound, vibration, deflection, heaving, lifting and other inadvertent deflection or movement of the container 30 within the container seat 20 during operation of the motor 16.

Referring again to FIGS. 9-12, the engagement between the container seat 20 and the upper portion 22 of the housing 12 can include various configurations. One such configuration includes a portion of the housing 12 extending over a portion of the container seat 20. In this manner, it is contemplated that the upper portion 22 of the housing 12 can extend upward to at or near the upper edge 70 of the perimetrical collar wall 24. In such an embodiment, when the base 34 of the container 30 is placed within the collar recess 28, the container seat 20 can be substantially concealed through the placement of the base 34 of the container 30 within the collar recess 28. It is also contemplated that the container seat 20 can be placed on top of the upper portion 22 of the housing 12 such that the container seat 20 is a visible feature of the food processing appliance 10. It is also contemplated that the upper portion 22 of the housing 12 can include a housing collar that extends at least partially over a portion of the perimetrical collar wall 24 of the container seat 20 to at least partially conceal the container seat 20 from view.

Referring now to the various embodiments illustrated in FIGS. 9-12, the rotational coupler 14 of the housing 12 is in communication with the collar recess 28 of the container seat 20. It is contemplated that the rotational coupler 14 can extend upward from the lower pad 26 of the container seat 20 to extend at least partially within the collar recess 28. It is also contemplated that the rotational coupler 14 can be recessed within a portion of the lower pad 26. In the various embodiments, these configurations, having different heights of the rotational coupler 14 relative to the lower pad 26, the rotational coupler 14 can be configured to receive the blade coupler 42 of the blade assembly 38. In this manner, the blade coupler 42 is configured to matingly engage with the rotational coupler 14 to provide a substantially secure engagement between the blade coupler 42 and rotational coupler 14 to transfer rotational force from the motor 16 to the processing blade 40 via the engagement of the rotational coupler 14 and the blade coupler 42.

Referring again to FIGS. 9-12, in order to provide for the substantially secure engagement between the rotational coupler 14 and the blade coupler 42, the rotational coupler 14 and the blade coupler 42 can include various coupling mechanisms 80 that can include, but are not limited to, meshing cogs, meshing gears, mating protrusions, mating protrusions and recesses, detents, magnetic couplers, combinations of these coupling mechanisms 80 and other similar engagement features that are configured to substantially secure the rotational coupler 14 with the blade coupler 42. It is also contemplated that the blade coupler 42 can fit within a coupling recess 82 defined within the rotational coupler 14 to define the secure engagement between the rotational coupler 14 and the blade coupler 42. Alternatively, the coupling recess 82 can be defined within the blade coupler 42 such that the rotational coupler 14 fits within the blade coupler 42 to define the secure engagement. It is also contemplated that the blade coupler 42 and rotational coupler 14 can engage through a surface or intermingling engagement between the two to define the secure engagement between the blade coupler 42 and the rotational coupler 14 to place the motor 16 in communication with the processing blade 40 and the processing chamber 32.

According to the various embodiments, the motor 16 for the food processing appliance 10 can be a single speed motor, multi-speed motor, single direction motor, dual direction motor, or other similar motor type that is configured to rotate the rotational coupler 14 of the housing. It is also contemplated that the housing 12 can include a gearing mechanism that is configured to transfer the rotational movement from the motor 16 to the rotational coupler 14, wherein the gearing mechanism is configured to adjust, reverse, modulate, or otherwise modify the rotational input of the motor 16. Accordingly, the speed, rotational direction and rotational force, the rotational output of the rotational coupler 14, and, in turn, the processing function or capability of the processing blade 40 can be modified through the configuration of the motor 16 and gearing mechanism.

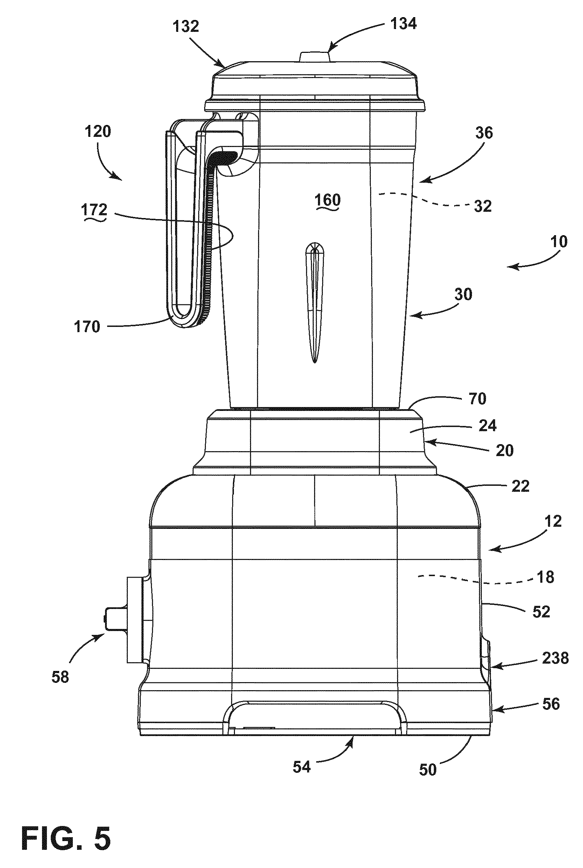

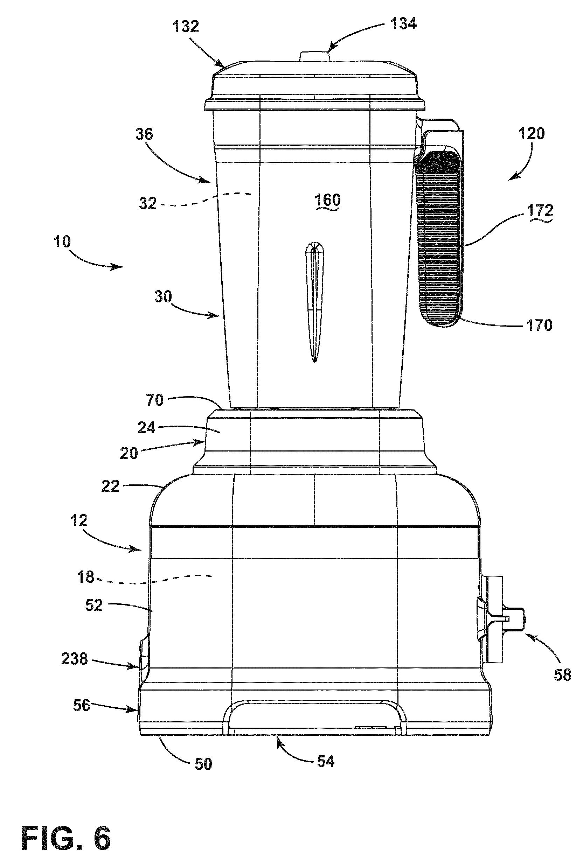

Referring now to FIGS. 5 and 6, the blade assembly 38 can include a processing blade 40 having at least two wings 90 that are formed from a single integral piece. It is also contemplated that the processing blade 40 can include three or more wings 90 that are formed from a single integral piece. According to the various embodiments, it is also contemplated that the blade can be a multi-part blade assembly 38 that is fixed to place each of the individual wings 90 in a particular predetermined configuration relative to the other wings 90 of the processing blade 40.

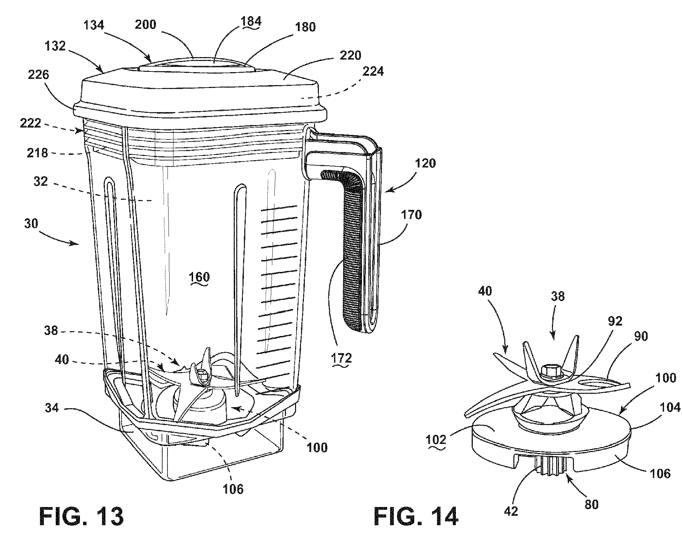

Referring again to the various embodiments illustrated in FIGS. 13 and 14, the processing blade 40 can include four wings 90 that are formed from a single integral piece. It is contemplated that the four wings 90 can at least partially form a hyperbolic parabaloid, where a first pair of opposing wings 90 extend in a substantially continuous upward curve from a central blade portion 92. It is also contemplated that a second pair of opposing wings 90 can extend in a substantially continuous downward curve extending from the central blade portion 92. In various alternate embodiments, it is contemplated that the various wings 90 of the processing blade 40 can include continuously curved wings, angled wings, and other wing configurations where the various wings 90 of the processing blade 40 can curve upward, curve downward, extend horizontally, extend vertically, extend in an angular configuration, combinations thereof, or other similar configuration. The exact configuration of the processing blade 40 can be determined based upon the various factors that can include, but are not limited to, the functions of the food processing appliance 10, the speed of rotation of the rotational coupler 14 and blade assembly 38, the type of food items to be processed within the food processing appliance 10, the size of the container 30, and other similar considerations.

Referring again to FIGS. 13 and 14, the blade assembly 38 can include a blade disc 100 that is configured to position the processing blade 40 and the blade coupler 42 proximate the base 34 of the container 30. It is contemplated that the blade disc 100 can include a top surface 102 that includes a substantially convex shape. According to the various embodiments, it is contemplated that the substantially convex shape of the top surface 102 of the blade disc 100 can be substantially similar to a curve of at least one of the wings 90 of the processing blade 40.

According to various alternate embodiments, the top surface 102 of the blade disc 100 can include a substantially concave surface that extends upwards. It is also contemplated that the top surface 102 of the blade disc 100 can include various other configurations that can include, but are not limited to, arcuate, planar, rippled, irregular, combinations thereof, and other similar configurations.

It is contemplated that the processing blade 40 can be manufactured to be non-removable from the blade assembly 38 by a user. In such an embodiment, a substantially precise configuration of the processing blade 40 within the blade assembly 38 can be maintained where the processing blade 40 is at a high rate of rotation, such as 20,000 rpm or more. In various alternate embodiments, the processing blade 40 may be removable from the blade disc 100 for cleaning and maintenance by hand and without the use of tools, or with the use of tools.

Referring again to FIGS. 13 and 14, it is contemplated that the blade disc 100 of the blade assembly 38 can include a gasket 104 that extends around a portion of the blade disc 100 and engages a portion of the base 34 of the container 30. The gasket 104 of the blade disc 100 can substantially prevent food particles, fluid, debris, and other material from leaving the processing chamber 32 and becoming disposed within the base 34 of the container 30. It is also contemplated that the blade disc 100 can include an outer disc wall 106 that substantially engages a portion of the base 34 of the container 30 to substantially secure the blade disc 100 within the base 34 of the container 30. It is further contemplated that the blade disc 100 can include various engagement features that can matingly engage a portion of the base 34 to further secure the blade disc 100 and the blade assembly 38 within the base 34 of the container 30.

Referring again to FIGS. 13 and 14, according to various embodiments, the container 30 can be made of various materials that can include, but are not limited to, plastic, glass, ceramic, combinations thereof, and other substantially translucent or transparent materials. Various measurement indicia can be disposed upon a wall of the container 30 to communicate to the user the amount of a particular liquid or food item that is disposed within the processing chamber 32 of the container 30. Additionally, the container 30 can include a handle 120 that extends from a wall of the container 30 and allows the user an appendage with which to grasp the container 30 for lifting, pouring, placing in a desired position, cleaning, or other function related to the operation of the food processing appliance 10.

Referring again to FIGS. 9-11 and 15, it is contemplated that the container 30 can include an upper rim 130 defining an aperture for accessing the processing chamber 32. A lid 132 can be configured to engage the container 30 at the upper rim 130 to substantially enclose the processing chamber 32. It is also contemplated that the lid 132 for the container 30 can include a removable central cap 134. The lid 132 can include an inner aperture 136 that is configured to receive the removable central cap 134 such that the engagement between the removable central cap 134 and the remainder of the lid 132 forms a substantially sealed engagement that prevents fluid and other debris from escaping the processing chamber 32 when the lid 132 is placed on the rim. According to various embodiments, the removable central cap 134 can include an inner volume 138 that can also be used as a measuring device 140 for measuring various fluids, food items, or other materials to be disposed within the processing chamber 32 of the food processing appliance 10. As with the container 30, the removable central cap 134 can include measurement indicia on a portion of the removable central cap 134 to communicate to the user the amount of a particular liquid, food item or other material that is disposed within the inner volume 138 and which will be disposed within the processing chamber 32 of the container 30. The configuration of the lid 132 and the removable central cap 134 will be described more fully below.

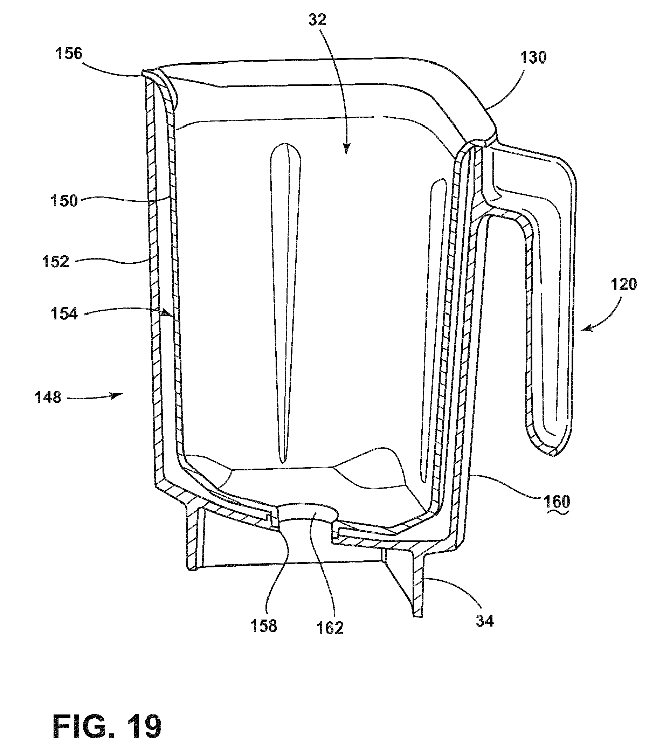

Referring now to the various embodiments illustrated in FIG. 19, the container 30 can include various structural configurations. One such structural configuration can include a dual wall container 148 having an inner wall 150 and an outer wall 152 that define a wall cavity 154. The wall cavity 154 can be enclosed at a wall top edge 156 near the upper rim 130 of the dual wall container 148 and also at a wall bottom edge 158 near the base 34 of the dual wall container 148. The inclusion of the inner and outer walls 150, 152 of the dual wall container 148 can serve to thermally and acoustically insulate the processing chamber 32. Accordingly, when ice, chilled items, or other cold food items are being processed within the processing chamber 32 of the dual wall container 148, the wall cavity 154 and the inner and outer walls 150, 152 can provide an insulating functionality that substantially limits the amount of thermal transfer between the processing chamber 32 and the exterior surface 160 of the dual wall container 148. The insulating function of the dual wall container 148 can also operate where heated foods are being processed within the processing chamber 32 of the dual wall container 148. As with the chilled items, the insulating properties of the wall cavity 154 can serve to limit the amount of thermal transfer between the heated food items within the processing chamber 32 and the cooler areas proximate the exterior surface 160 of the dual wall container 148. The wall cavity 154 can also prevent substantial amounts of sound from leaving the dual wall container 148. In various embodiments, it is contemplated that the wall cavity 154 can include a gas or other similar material disposed therein to further enhance the insulative properties of the wall cavity 154 defined between the inner and outer wall 150, 152 of the dual wall container 148.

According to the various embodiments, as illustrated in FIG. 19, the inner and outer wall 150, 152 of the dual wall container 148 can be made of various materials that can include, but are not limited to, plastic, glass, ceramic, a polymeric material, combinations thereof, and other similar substantially transparent or translucent materials. It is contemplated that the material of the inner wall 150 and the material of the outer wall 152 of the dual wall container 148 can be dissimilar materials that are positioned within the container 30 for specific insulative purposes. By way of example, and not limitation, the inner wall 150 of the dual wall container 148 can be made of glass to provide enhanced thermal properties and the outer wall 152 of the dual wall container 148 can be made of plastic to provide a protective barrier for the wall cavity 154 and the glass portion of the container 30. It is also contemplated that the inner and outer walls 150, 152 or the entire dual wall container 148 can be made of a single material.

Referring again to FIG. 19, the inner wall 150 and the outer wall 152 can be connected together through any one of various methods that can include, but are not limited to, fiber laser welding, sonic welding, ultrasonic welding, heat welding, adhesives, combinations thereof, and other similar methods. Additionally, it is contemplated that the dual wall container 148 can include one or more vacuum ports that can be used to create a vacuum within the wall cavity 154 or to dispose one or more insulating gasses within the wall cavity 154.

According to the various embodiments, where fiber laser welding is used to form the dual wall container 148, the laser can be focused on a very precise area at the points at which the inner wall 150 and the outer wall 152 engage. As such, the fiber laser welding process allows the inner and outer walls 150, 152 to both be made of clear or substantially clear materials. Alternatively, other welding methods may require that one of the materials to be opaque or at least some darker and translucent material to effectively be welded. However, because fiber laser welding can be performed on two clear materials, the fiber laser welding process can create a clear or substantially clear dual wall container 148 through precise welds. Additionally, because the welds are substantially precise between the inner and outer walls 150, 152, the fiber laser welding process can substantially minimize the visibility of the welded seams of the dual wall container 148.

Referring again to FIG. 19, the inner and outer walls 150, 152 of the dual wall container 148 can include a bottom edge 158 that defines a blade aperture 162. In this manner, the inner and outer walls 150, 152 can each include a lower opening through which the blade assembly 38 can be installed and secured. The blade aperture 162 can include a blade gasket that substantially seals the blade assembly 38 within the blade aperture 162. Alternatively, the blade gasket and blade aperture 162 can cooperate with the blade assembly 38 to allow for removal of the blade assembly 38 and reinstallation thereof for cleaning, maintenance and/or replacement of the blade assembly 38.

According to various embodiments, it is contemplated that the wall cavity 154 defined between the inner and outer walls 150, 152 of the dual wall container 148 can include an at least partial vacuum to enhance the insulative properties of the dual wall container 148. It is also contemplated that the wall cavity 154 can be free of any type of vacuum such that the insulating and sound dampening properties are provided by the material of the inner and outer walls 150, 152.

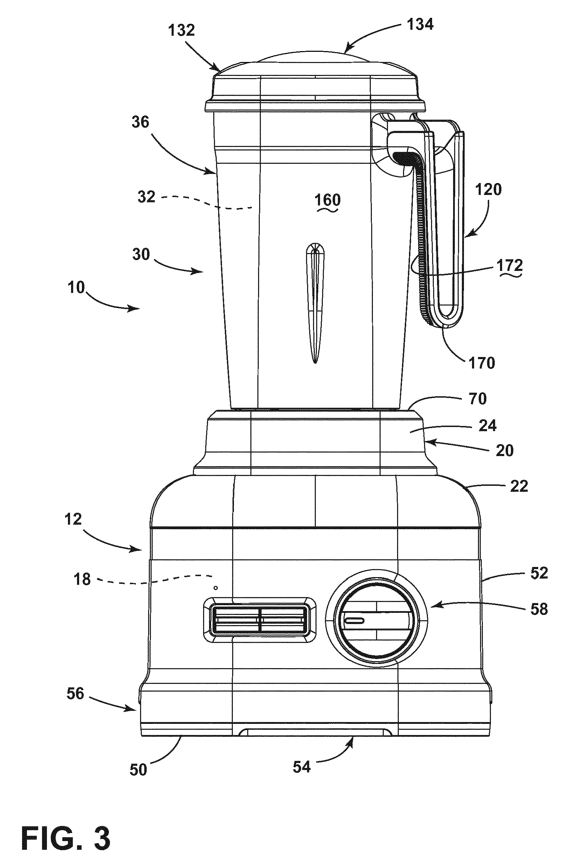

Referring again to the embodiments illustrated in FIGS. 3-7, it is contemplated that the handle 120 can include a handle grip 170 that extends around a portion of the handle 120. It is also contemplated that the handle grip 170 can include a substantially flexible and/or tactile material that is easy to grip. Such material can be made of various materials that include, but are not limited to, rubber, silicone, plastic, various polymers, combinations thereof and other similar materials that can provide a convenient gripping surface to the handle 120 of the container 30. In addition to the material, the handle grip 170 can include various tactile surfaces 172 that can include, but are not limited to, ridges, dimples, protrusions, nodes, and other similar physical configurations that are defined within the surface of the handle grip 170.

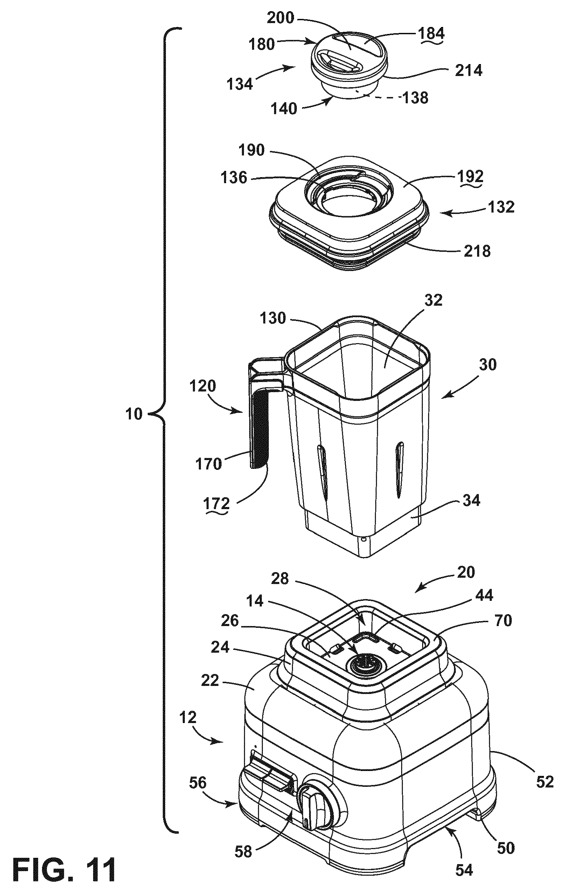

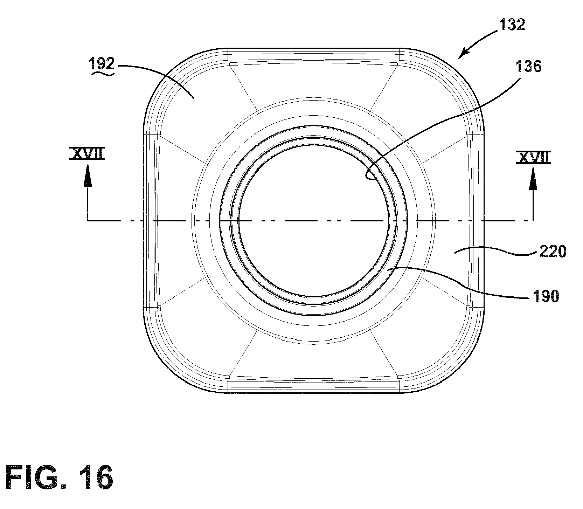

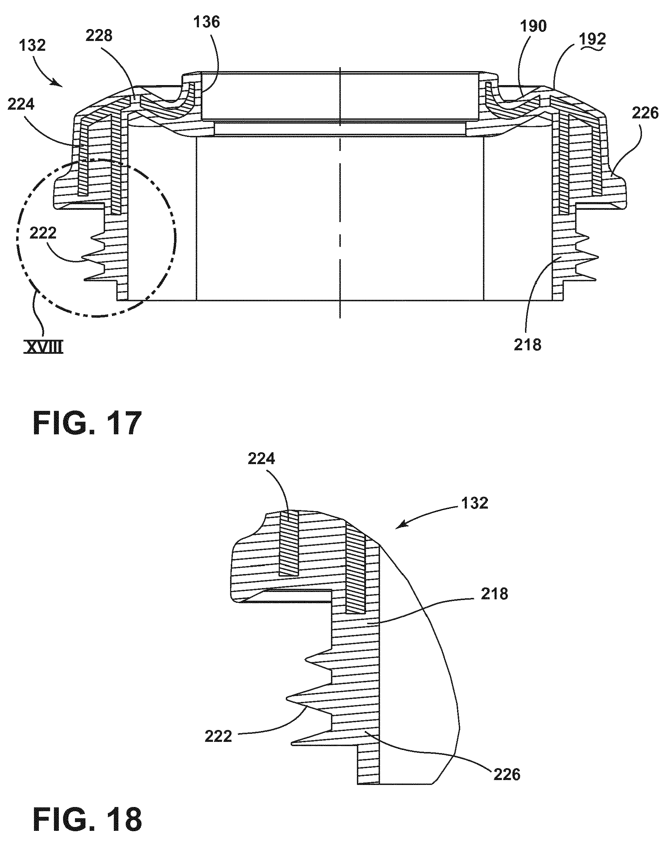

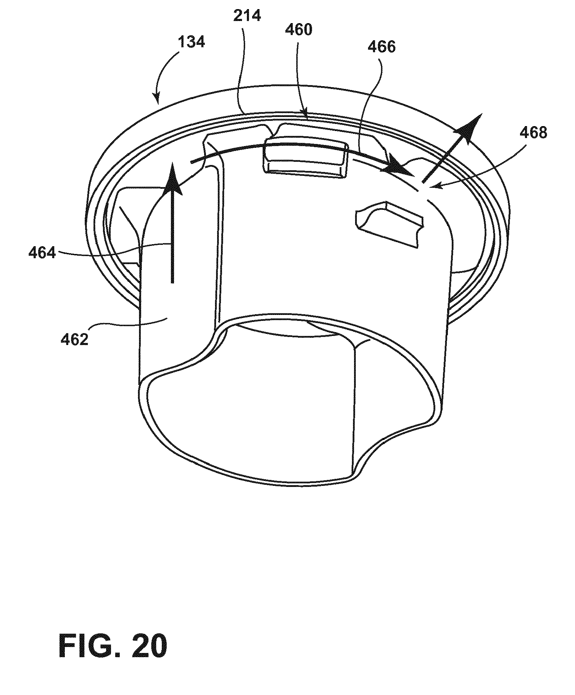

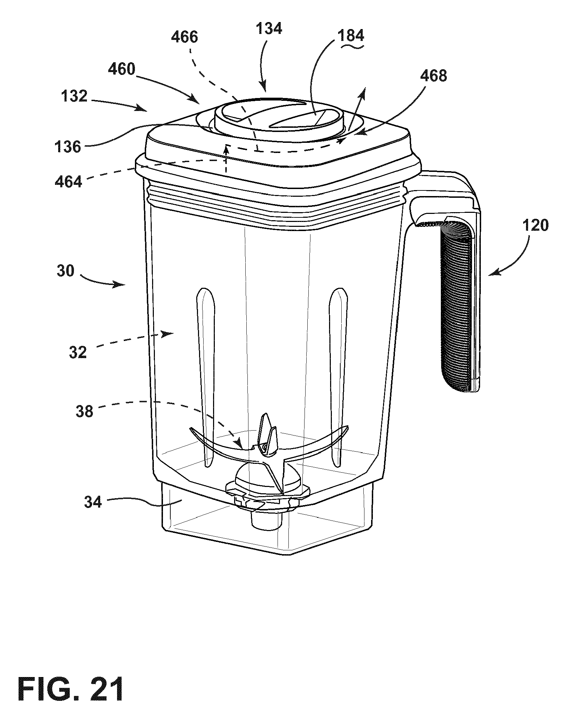

Referring now to the various embodiments illustrated in FIGS. 11, 15-18 and 20-21, the lid 132 can include the inner aperture 136 defined within a portion of the lid 132 where the inner aperture 136 is configured to receive the removable central cap 134 of the lid 132. According to the various embodiments, the removable central cap 134 can include a two-piece configuration, where an outer cap portion 180 of the removable central cap 134 can be substantially opaque or at least partially translucent and can include various decorative elements, indicia, or other similar features. The measuring portion 182 of the removable central cap 134 can be at least partially translucent to transparent and include measurement indicia such that the user can easily view items being disposed within the inner volume 138 of the removable central cap 134 to accurately measure the amount of a particular item being placed within the inner volume 138 of the removable central cap 134.

Referring again to FIGS. 11, 15-18 and 20-21, a cap surface 184 of the removable central cap 134 can include a notch feature that is configured to matingly engage a portion of the inner aperture 136 of the lid 132. In this manner, the notch feature and the inner aperture 136 are configured to matingly engage and substantially secure the removable central cap 134 within the inner aperture 136 of the lid 132.

According to various embodiments, the inner aperture 136 of the lid 132 can include a pouring feature, such as a chute, ramp, funnel, or other member that can be placed within the inner aperture 136 to provide a convenient portal through which various items can be poured from the volume of the removable central cap 134 and into the processing chamber 32 of the container 30. According to various alternate embodiments, the portion of the lid 132 that extends toward the inner aperture 136 of the lid 132 can include a continual downward slope 190 toward the inner aperture 136 such that the configuration of the upper lid surface 192 of the lid 132 forms an integral funnel configuration that can be used to assist in pouring various items through the inner aperture 136 and into the processing chamber 32 of the container 30.

Referring again to FIGS. 77-83, the lid 132 can include a container-engaging wall 218 that extends downward from a lid flange 220. In such an embodiment, the container-engaging wall 218 can include one or more integral securing rings 222 that extend outward from the container-engaging wall 218. In this manner, the integral securing rings 222 form a tight seal between the lid 132 and the upper rim 130 of the container 30.

Referring again to FIGS. 77-81, the lid 132 can include a substantially rigid interior frame 224 that is surrounded by a substantially flexible covering 226. Additionally, to allow the lid 132 greater movement during use, the interior frame 224 can include one or more joints 228 that allow the interior frame 224 to move with the flexible covering 226. In this manner, the joints 228 of the interior frame 224 allow the lid 132 to substantially confirm to the shape of the upper rim 130 of the container 30 to form a substantially tight seal.

Referring again to FIGS. 9-11 and 15-18, the outer cap portion 180 of the removable central cap 134 can include a grasping feature 200 that extends across a portion of the outer surface of the removable central cap 134. Such a grasping feature 200 can be configured to allow the user to grasp the removable central cap 134 and conveniently insert and remove the removable central cap 134 from the inner aperture 136 or insert and remove the lid 132 from the container 30. The grasping feature 200 can also assist the user in holding the removable central cap 134 during measuring functions where various food items are placed within the inner volume 138 of the removable central cap 134.

According to various embodiments, the outer portion of the removable central cap 134 can include a support surface that can be used to support the removable central cap 134 on a counter, table or other surface such that the removable central cap 134 can be positioned in a stable configuration while various items are poured into the inner volume 138 of the removable central cap 134.

Referring again to FIGS. 9-11 and 15-18, the removable central cap 134 can include an inner perimeter 210 that defines a first portion 212 of the inner volume 138 of the removable central cap 134 and an outer perimeter 214 that defines a second portion 216 of the inner volume 138 of the removable central cap 134. In this manner, the inner perimeter 210 and outer perimeter 214 can cooperate with the inner aperture 136 to form a multi-wall engagement system that substantially seals the connection between the removable central cap 134 and the inner aperture 136. In this manner, the inner perimeter 210 of the removable central cap 134 can extend into the inner aperture 136 and substantially engage a portion of the inner aperture 136. The outer perimeter 214 of the removable central cap 134 can engage the upper lid surface 192 of the lid 132 to provide a supplemental engagement between the removable central cap 134 and the lid 132. In such an embodiment, where a certain amount of fluid or debris may be disposed in the inner volume 138 between the inner and outer perimeters 210, 214 of the removable central cap 134, various drain notches can be included within either the removable central cap 134 or the lid 132 through which such trapped fluid and debris can be drained into the processing chamber 32 of the container 30.

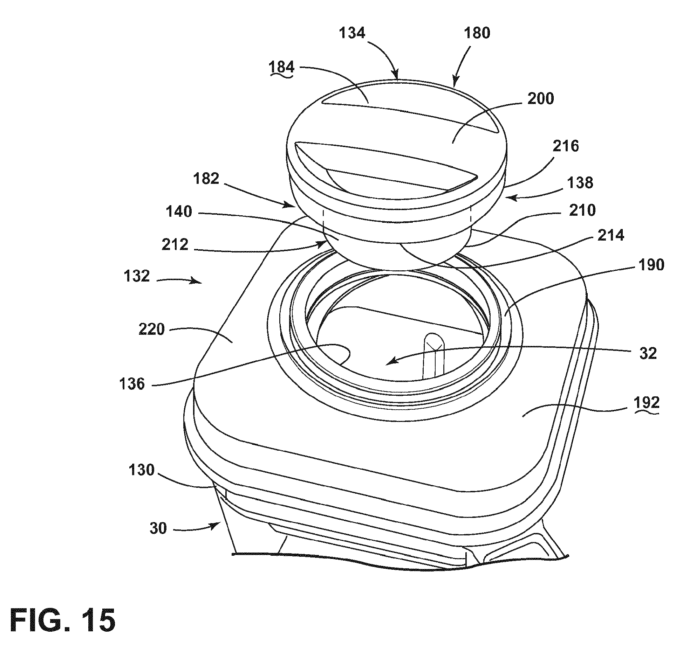

Referring now to the various embodiments illustrated in FIGS. 15-18 and 20-21, the combination of lid 132 and the removable central cap 134 can define an airflow vent system 460. The airflow vent system 460 can be defined by a vent channel 462 that extends in a substantially circuitous route through a region, defined between the engagement of the inner aperture 136 of the lid 132 and the removable central cap 134. According to the various embodiments, the vent channel 462 can include a series of turns through which the vented air must travel in order to be evacuated from the processing chamber 32 of the container 30. It is contemplated that the vent channel 462 could include a first upward vent portion 464 at which point the vented air turns at a substantially 90° angle and extends along a transverse arcuate vent portion 466. It is contemplated that the arcuate vent portion 466 can extend along an outer perimeter 214 of a portion of the removable central cap 134. Once the vented air reaches the end of the arcuate vent portion 466, the vented air can then proceed upward through a venting aperture 468 to allow the vented air to escape the processing chamber 32 of the container 30. Through the use of this circuitous route of the airflow vent system 460, the vented air can be allowed to move through the vent channel 462 while substantially preventing fluid, food matter, and other debris from escaping the processing chamber 32 during operation of the food processing appliance 10. It is also contemplated that the vent channel 462 can include a generally downward slope such that any fluid or other debris that may enter a portion of the vent channel 462 can be funneled back downward and into the processing chamber 32 to prevent unintentional discharge of debris from the container 30 during operation of the food processing appliance 10.

According to the various embodiments, the vent channel 462 can include additional vent portions that add to the amount of turns necessary within the vent channel 462 to allow the vented air to escape the processing chamber 32. It is also contemplated that the engagement between the removable central cap 134 and the inner aperture 136 of the lid 132 can include a single vent channel 462, or, alternatively, two or more independent vent channels 462 that allow for vented air to escape the processing chamber 32 through a plurality of vent apertures 468 defined in a portion of the lid 132, the removable central cap 134, or both.

According to the various embodiments, the airflow vent system 460 allows vented air to escape the processing chamber 32 such that the pressure within the processing chamber 32 does not increase to a level that may cause the lid 132 to become dislodged from the container 30. Such pressure may increase due to the mixing process and potential heat that may be generated during one of the various mixing or food processing procedures that can be performed by the food processing appliance 10. The airflow vent system 460 allows for this increased pressure to be discharged from the processing chamber 32 during operation of the food processing appliance 10 such that the lid 132 remains substantially secured within the upper rim 130 of the container 30. As discussed above, the circuitous route of the vent channel 462 through the upward vent portion 464, the arcuate vent portion 466 and upward through the vent aperture 468 allows the vented air to escape while substantially containing the various mixed food items and liquid to be contained within the processing chamber 32 of the container 30.

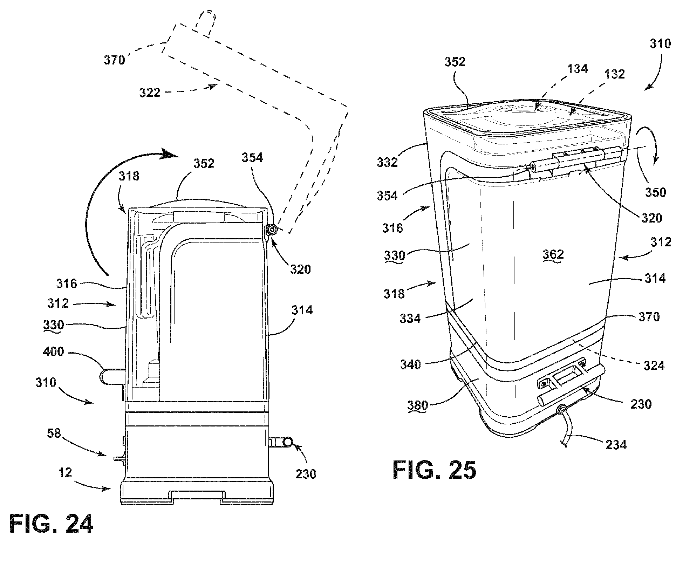

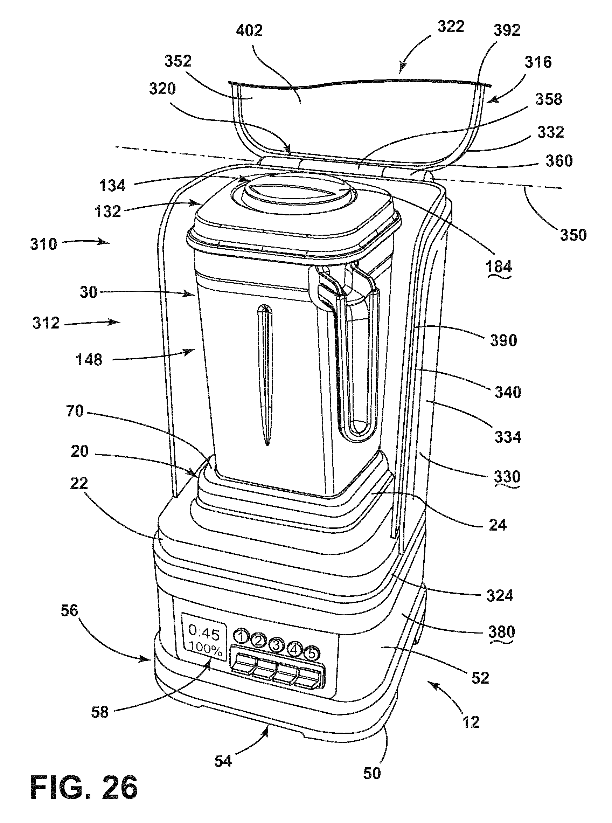

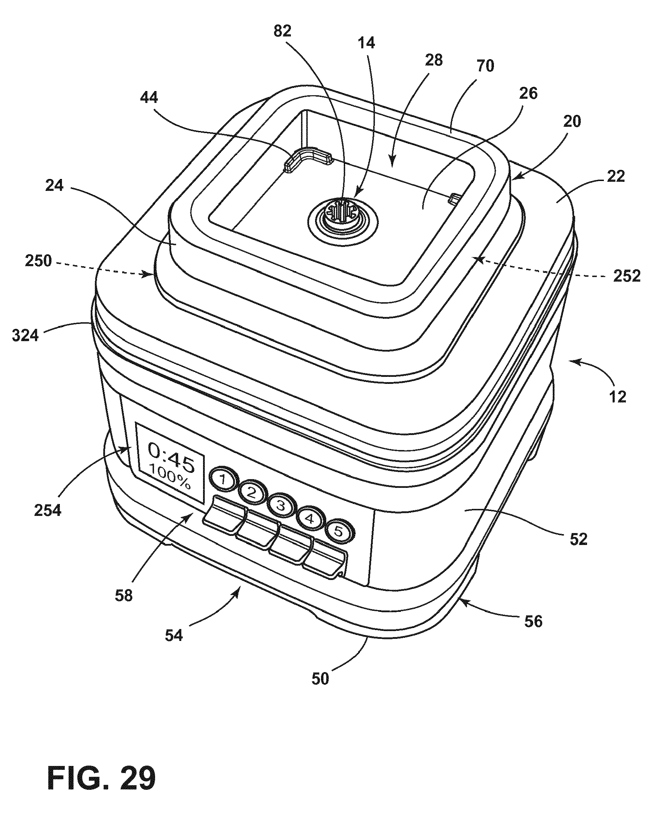

Referring now to the various embodiments illustrated in FIGS. 25-30, the housing 12 of the food processing appliance 10 can be made of any one of various materials that can include, but are not limited to metal, plastic, ceramic, polymers, composite materials, combinations thereof, and other similar substantially rigid materials that can be implemented within household and commercial appliances. Additionally, a variety of finishes can be implemented within the housing, the container 30 and the food processing appliance 10 as a whole. Such finishes can include, but are not limited to, stainless steel, chrome, painted finishes, various colors integrated within the various materials of the food processing appliance 10, die cast materials, die cast zinc, other die cast materials, formable materials, injectable materials, and other similar materials having a variety of finishes. Additionally, the various materials of the housing, container 30, and the food processing appliance 10 as a whole, can be painted in any one of a variety of colors.

Referring again to the embodiments illustrated in FIGS. 1-12, the various materials of the food processing appliance 10 can include any one or more of a variety of finishes applied to the various materials of the food processing appliance 10. Such finishes can include polished, brushed, tumbled, satin, stamped patterns, molded patterns, etched patterns, various smooth finishes, various textured finishes, combinations thereof, and other similar surface textures or conditions.

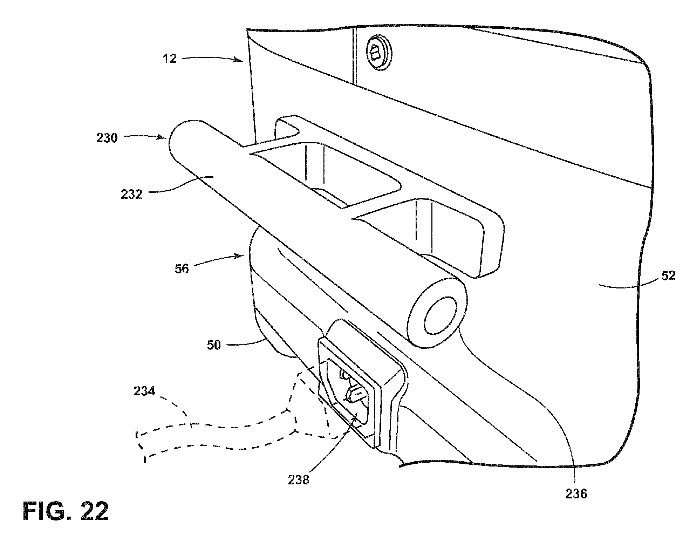

Referring now to the various embodiments illustrated in FIGS. 22, 24 and 25, the food processing appliance 10 can include a cord wrap cleat 230 that is disposed on a portion of the housing 12. According to the various embodiments, the cord wrap cleat 230 can extend outward from the housing 12 or can be defined within a cleat recess disposed within a portion of the housing 12. It is also contemplated that the cord wrap cleat 230 can include a cleat bar 232 having a cylindrical shape. The cleat bar 232 assists in retaining the electrical cord 234 in the wrapped position about the cord wrap cleat 230. In various alternate embodiments, the cord wrap cleat 230 can include a cleat bar 232 that includes any one of various shapes that can include, but are not limited to, prism shape, arcuate, linear, irregular, combinations thereof, or other various geometric configurations. It is also contemplated that a portion of the cord wrap cleat 230 can include cleat indicia 236 for placing various logos, operating information, decorative patterns, combinations thereof, or other various indicia or communicative information.

Referring again to the various embodiments illustrated in FIGS. 22 and 24-25, the food processing appliance 10 can include an electrical cord 234 that extends to a power source, such as an electrical outlet. It is contemplated that the electrical cord 234 of the food processing appliance 10 can be hardwired to the housing 12 and permanently affixed such that the cord can be wrapped around the cord wrap cleat 230 to define the wrapped position or extended to the electrical power source to provide current to the various electrical aspects of the food processing appliance 10. It is also contemplated that the electrical cord 234 can be removable such that one end of the electrical cord 234 has a male electrical connector that can engage the electrical outlet and a housing end of an electrical cord 234 that can removably engage a power receptacle 238 disposed within a portion of the housing 12 of the food processing appliance 10. Where the electrical cord 234 is removable, the electrical cord 234 can either be stored separately from the food processing appliance 10, or can be wrapped around the cord wrap cleat 230 to define a wrapped position of the electrical cord 234.

Referring now to the various embodiments illustrated in FIGS. 1-12 and 33, the food processing appliance 10 can include a weight scale 250 disposed within a portion of the housing 12 or the container seat 20 that measures the weight of the various items measured within the processing chamber 32 of the container 30. According to various embodiments, portions of the container seat 20, including the lower pad 26, the perimetrical collar wall 24, or other portions of the container seat 20 can include a pressure-sensitive portion that can be pressed downward by the base 34 of the container 30. The more items that are placed within the processing chamber 32 of the container 30, the more pressure is exerted upon the pressure-sensing region of the container seat 20. This information concerning the weight of the container 30 and items disposed within the processing chamber 32 can be communicated to a weight sensor 252, then to a weight scale display 254 that communicates to the user the weight of the material disposed within the processing chamber 32.

Referring again to FIGS. 1-12 and 33, in use, according to the various embodiments, the user can place the container 30 and/or the lid 132 within the container seat 20 and engage a calibrating function 256 of the weight scale 250 to set the weight scale 250 at zero when the container 30 and various aspects of the container 30 are placed within the container seat 20. As various food items and other material are added to the processing chamber 32, the weight of these items are reflected upon the weight scale display 254, with the weight of the container 30, lid 132 and other aspects of the container 30 removed, such that only the weight of the items placed within the processing chamber 32 are reflected within the weight scale display 254. The weight scale display 254 can include a units function 258 for changing the units reflected by the weight scale display 254 from metric to English to other various units. The weight scale display 254 can include functions for accounting for dry weight versus liquid weight and other similar parameters that can be used depending upon the type of food or other item placed within the processing chamber 32 of the food processing appliance 10.

Referring again to the various embodiments illustrated in FIGS. 1-12 and 33, the weight scale display 254 can be disposed within various portions of the food processing appliance 10. In certain embodiments, the weight scale display 254 can be disposed upon a surface of the perimetrical collar wall 24 of the container seat 20. In such an embodiment, the outer surface of the perimetrical collar wall 24 can be sloped generally outward such that the weight scale display 254 can be similarly sloped in a slightly upward direction. In this manner, the weight scale display 254 can be placed at a convenient viewing angle for users of the food processing appliance 10. According to various alternate embodiments, the weight scale display 254 can be disposed within a portion of the housing 12, along with other portions of the appliance control 58, as will be described more fully below. According to various embodiments, the weight scale display 254 can include various other function controls that can include, but are not limited to, a weight scale power control 260, a function for calculating the volume of items disposed within the processing chamber 32, temperature readings where various sensors of the food processing appliance 10 are included for measuring the weight of portions of the processing chamber 32 and other various functions and controls.

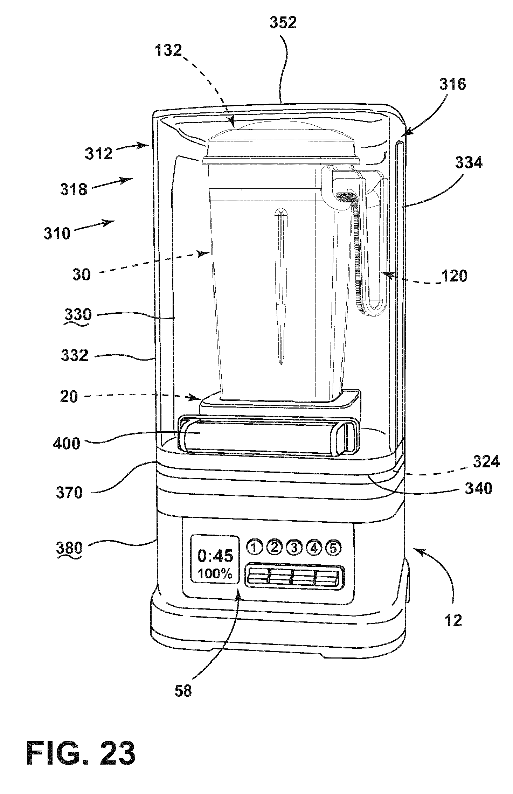

Referring now to the various embodiments illustrated in FIGS. 23-29, an embodiment of the food processing appliance 10 can include a smoothie blender 310 incorporating an upper enclosure 312 disposed on the upper portion 22 of the housing 12 and configured to at least partially surround the container seat 20 and the container 30, when the container 30 is disposed within the container seat 20. The upper enclosure 312 includes a substantially stationary back wall 314 and an operable front lid 316 that matingly engages the back wall 314 to define the enclosed position 318 of the upper enclosure 312. It is contemplated that the front lid 316 and the back wall 314 are rotationally engaged at a back hinge 320, where the back hinge 320 extends rearward of the back wall 314 and the front lid 316, when the upper enclosure 312 is in the enclosed position 318. According to this configuration of the back hinge 320, the front lid 316 is positioned substantially above the back wall 314 when the upper enclosure 312 is placed in an open position 322 where the user can access the container 30 of the food processing appliance 10.

It is contemplated that the upper enclosure 312 can be a separate piece that is selectively disposed on the upper portion 22 of the housing 12 that can be removed by hand and without the use of tools. Alternatively, it is contemplated that the back wall 314 of the upper enclosure 312 can be integrated or affixed to a portion of the housing 12 such that the upper enclosures 312 may not be removable from the housing 12 or is not removable without the use of tools.

Referring again to FIGS. 23-29, the upper enclosure 312 is configured to substantially dampen or contain sound emanating from the food processing appliance 10 such that the food processing appliance 10 may be configured to operate at a lower decibel level than when the upper enclosure 312 is removed. The upper enclosure 312 can perform these dampening functions either through the materials included within portions of the upper enclosure 312 or through the physical configuration of the upper enclosure 312 to substantially seal against an enclosure seat 324 proximate the upper portion 22 of the housing. In this manner, the upper enclosure 312 can enclose the container seat 20 and the container 30 to dampen the amount of sound emanating from the food processing appliance 10.

Referring again to FIGS. 23-29, the engagement between the front lid 316 and the back wall 314 as a result of the configuration of the back hinge 320, can be such that when the upper enclosure 312 is in the enclosed position 318, the front lid 316 and back wall 314 form a substantially continuous enclosure surface 330 such that at least a portion of lid walls 332 of the front lid 316 and body walls 334 of the back wall 314 are substantially aligned and substantially coplanar when the front lid 316 defines the enclosed position 318 of the upper enclosure 312. This configuration provides the appearance of a seamless interface between the front lid 316 and the back wall 314 of the upper enclosure 312. This tight engagement between the front lid 316 and back wall 314 of the upper enclosure 312 can add to the sound dampening functionality of the upper enclosure 312 by minimizing the size and amount of openings through which sound might emanate from the food processing appliance 10.

Referring again to FIGS. 23-29, to further limit the size and amount of openings between the front lid 316 and back wall 314 of the upper enclosure 312 through which noise might emanate, an enclosure seal 340 can be disposed between portions of the front lid 316 and the back wall 314. The enclosure seal 340 can further accentuate and enhance the substantially seamless engagement between the front lid 316 and the back wall 314 of the upper enclosure 312. Additionally, portions of the enclosure seal 340 can be disposed under the back wall 314 and/or under portions of the front lid 316 to provide a seal between the upper enclosure 312 and the enclosure seat 324 at the upper portion 22 of the housing 12. It is contemplated that various portions of the enclosure seal 340 can also limit the amount of vibration that may be transferred from the various components within the housing 12 to the upper enclosure 312, where such vibration may cause additional sound to emanate from the food processing appliance 10.

Referring again to FIGS. 23-29, in order to provide for the close and substantially seamless engagement between the front lid 316 and back wall 314 of the upper enclosure 312, the rear hinge of the upper enclosure 312 can extend rearward of the front lid 316 and back wall 314 to form a "clamshell" type configuration for operating the front lid 316 relative to the back wall 314. With the back hinge 320 extending rearward from the back wall 314 of the upper enclosure 312, the axis of rotation 350 of the front lid 316 is at a rearmost portion of the upper enclosure 312 and behind the back wall 314 in an offset configuration relative to the front lid 316 and back wall 314. This offset configuration of the back hinge 320 can result in portions of the front lid 316 extending behind the back hinge 320 and the back wall 314 when the front lid 316 is moved to the open position 322. Additionally, because the back hinge 320 is positioned near the lid top 352 of the front lid 316, the amount that the front lid 316 extends behind the back hinge 320 and the back wall 314 can be substantially minimized, while also allowing for the substantially seamless engagement between the front lid 316 and back wall 314 when the front lid 316 is in the enclosed position 318. In this manner, the upper enclosure 312 can achieve a substantially tight engagement between the back wall 314 and the front lid 316 when in the enclosed position 318. At the same time, this configuration of the upper enclosure 312 also minimizes the amount of clearance that is necessary behind the upper enclosure 312 to operate the front lid 316 between the enclosed and open positions 318, 322. It is contemplated that the cord wrap cleat 230 that can extend from the housing 12 can serve as a clearance guide to position the smoothie blender 310 the proper distance from a wall or other obstruction to allow for full movement of the front lid 316 between the enclosed and open positions 318, 322.

Referring again to the various embodiments illustrated in FIGS. 24-28, it is contemplated that the back hinge 320 can include a removable pin 354 that can be removed by hand and without the use of tools. The removable pin 354 can allow the front lid 316 to be removed from the back wall 314, such that the front lid 316 can be easily cleaned by placement within a dishwasher or washed by hand, and then replaced back into rotational engagement with the back wall 314 through the insertion of the removable pin 354 into the back hinge 320.

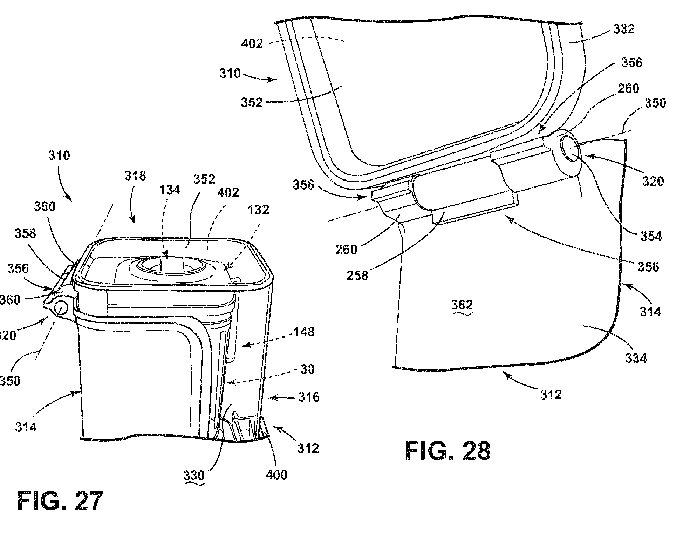

Referring now to FIGS. 27 and 28, the back hinge 320 can include an alignment flange 356 that extends outward from the back hinge 320. The back hinge 320 can include a lid portion 358 and a back wall portion 360, where the lid portion 358 rotates relative to the back wall portion 360 to operate the front lid 316 between the enclosed and open positions 318, 322. When the front lid 316 is moved to the open position 322, the alignment flange 356 within the lid portion 358 can engage a portion of the back surface 362 of the back wall 314 to stop the upward rotation of the front lid 316 and to define the open position 322 of the front lid 316 of the upper enclosure 312. It is also contemplated that the alignment flange 356 can cooperate with the cord wrap cleat 230 to define the full open position 322 of the upper enclosure 312 to prevent the front lid 316 from colliding with a rear obstruction during operation of the front lid 316 between the enclosed and open positions 318, 322.

According to the various embodiments, the alignment flange 356 can be a lateral member that extends along the lid portion 358 of the back hinge 320. It is also contemplated that the alignment flange 356 can be a tab, protrusion, or other outwardly extending member that can engage the back surface 362 of the back wall 314 to stop the rotation of the front lid 316 beyond an uppermost portion of the open position 322. It is contemplated that the alignment flange 356 defined by a portion of the lid portion 358 of the back hinge 320 can extend into the back wall portion 360 of the back hinge 320. It is contemplated that portions of the alignment flange 356 that extend into the back wall portion 360 can also serve as securing surfaces against which the alignment flange 356 of the lid portion 358 engages to define the uppermost portion of the open position 322. It is also contemplated that the alignment flange 356 that extends through the lid portion 358 and back wall portion 360 of the back hinge 320 can include a securing feature that substantially secures the lid portion 358 of the alignment flange 356 to the back wall portion 360 of the alignment flange 356 to prevent unintentional movement of the front lid 316 out of the enclosed position 318. It is further contemplated that the portions of the alignment flange 356 that extend into the back wall portion 360 can serve as aesthetic features that enhance the visual appeal of the upper enclosure 312 at the back hinge 320 along various points of the rotation of the front lid 316 relative to the back wall 314.

Referring again to the embodiments illustrated in FIGS. 23-29, the upper portion 22 of the housing 12 can include the enclosure seat 324 that receives the upper enclosure 312 and is configured to substantially secure the upper enclosure 312 to the upper portion 22 of the housing 12. It is also contemplated that the engagement between the upper enclosure 312 and the upper portion 22 of the housing 12 can be further secured through various attachment features that enhance and buttress the engagement between the upper enclosure 312 and the upper portion 22 of the housing 12. Such engagement features can include, but are not limited to, tabs, clips, hasps, clasps, mechanical fasteners, and other similar engagement mechanisms. Additionally, as discussed above, at least a section of the upper portion 22 of the housing 12 at the enclosure seat 324 can include the enclosure seal 340 that is configured to receive a lower edge 370 of the upper enclosure 312 that can serve to minimize vibration that is transferred from the various components of the housing 12 into the upper enclosure 312.

Referring again to FIGS. 23-29, according to the various embodiments, the exterior appliance surface 380 of the food processing appliance 10, including the upper enclosure 312, can define an aesthetic surface that is substantially continuous and has an appearance of being free of seams between the front lid 316, the back wall 314 and the housing 12. In this manner, the engagement between the housing 12 and the upper enclosure 312 in the enclosed position 318 provides the appearance of a substantially monolithic appliance that can serve to minimize the footprint of a food processing appliance 10, provide an easily cleanable surface and also provide an aesthetically pleasing appearance of the food processing appliance 10.

Referring again to FIGS. 23-29, the back wall 314 of the upper enclosure 312 can include a back wall lip 390 that extends along an edge of the back wall 314. This back wall lip 390 can substantially engage a front lid lip 392 that is configured to cooperatively engage with the back wall 314 to substantially secure the front lid 316 against the back wall 314 when in the enclosed position 318. It is contemplated that the engagement between the back wall lip 390 and the front lid lip 392 can be further secured through mating features that are defined on either one or both of the front lid lip 392 and the back wall lip 390. In this manner, when the front lid 316 is in the enclosed position 318, the mating engagement features of the front lid lip 392 and the back wall lip 390 can serve to selectively secure the front lid 316 in the enclosed position 318 and substantially prevent unintended movement of the front lid 316 out of the enclosed position 318.

Referring again to FIGS. 23-24, the front lid 316 of the upper enclosure 312 can include an enclosure handle 400 that extends forward of the front lid 316 and provides a member that the user can grasp in order to operate the front lid 316 between the enclosed and open positions 318, 322. According to the various embodiments, it is contemplated that the enclosure handle 400 can include a mechanism for securing the front lid 316 in the enclosed position 318, where such a mechanism can include a lock release that can be engaged to disengage a locking mechanism that may be disposed within portions of the front lid 316 and the upper portion 22 of the housing 12. In this manner, disengagement of the locking mechanism can allow the user to move the front lid 316 from the enclosed position 318 to the open position 322.

Referring again to FIGS. 23-27, the lid top 352 of the front lid 316 can include a contoured surface that substantially mimics the contour of the lid 132 of the container 30. It is also contemplated that the underside 402 of the lid top 352 can engage the lid 132 of the container 30 or be positioned proximate the lid 132 of the container 30 when the front lid 316 is in the enclosed position 318. In this manner, when the front lid 316 is in the enclosed position 318, the lid top 352 can substantially prevent the lid 132 of the container 30 from becoming dislodged from the container 30 during operation of the food processing appliance 10. It is also contemplated that the underside 402 of the lid top 352 can serve as a biasing feature for the lid 132 of the container 30. In this manner, when the front lid 316 is placed in the enclosed position 318, the underside 402 of the lid top 352 biases the lid 132 of the container 30 downward and through the upper rim 130 defining the aperture for accessing the processing chamber 32 such that the lid 132 can be secured within the processing chamber 32 when the front lid 316 is placed in the enclosed position 318. In various alternate embodiments, it is contemplated that the underside 402 of the lid top 352 can include a downwardly extending portion that is configured to matingly engage with the upper rim 130 of the container 30 such that the lid 132 of the container 30 is defined within the lid top 352 of the front lid 316 of the upper enclosure 312.

According to the various embodiments, it is contemplated that the engagement between the upper enclosure 312 and the upper portion 22 of the housing 12 can define a switch in communication with the motor 16. In this manner, the switch is activated when the front lid 316 is placed in the enclosed position 318. Once in the enclosed position 318, and the container 30 is encased within the upper enclosure 312 and secured therein, the switch is activated to allow the motor 16 to be engaged for operating the food processing appliance 10. Alternatively, when the front lid 316 is moved out of the enclosed position 318, the switch is deactivated such that the motor 16 cannot be operated until such time as the front lid 316 of the upper enclosure 312 is returned to the enclosed position 318 and the motor 16 is activated according to a desired food processing function of the food processing appliance 10. According to the various embodiments, it is contemplated that the switch described above can be implemented in embodiments of the food processing appliance 10 that do not incorporate the upper enclosure 312. In this manner, the switch can be activated between the lid 132 and the container 30 such that the switch is activated once the lid 132 is placed on the container 30 and the switch is deactivated once the lid 132 is removed from the container 30. The switch mechanism can prevent unintentional activation of the motor 16 that can result in damage to the appliance.

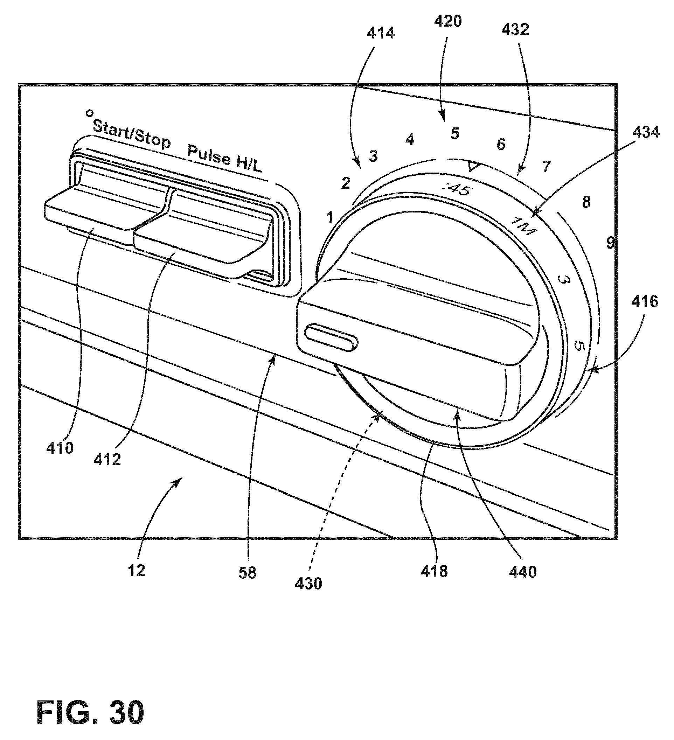

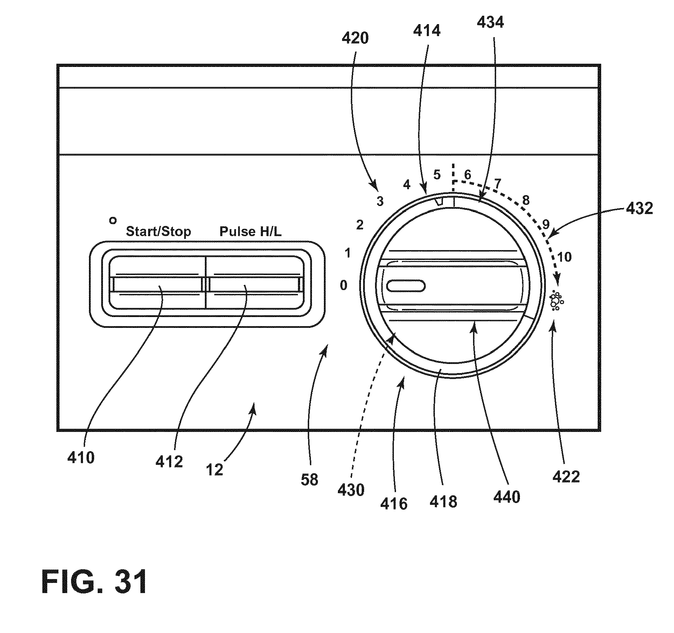

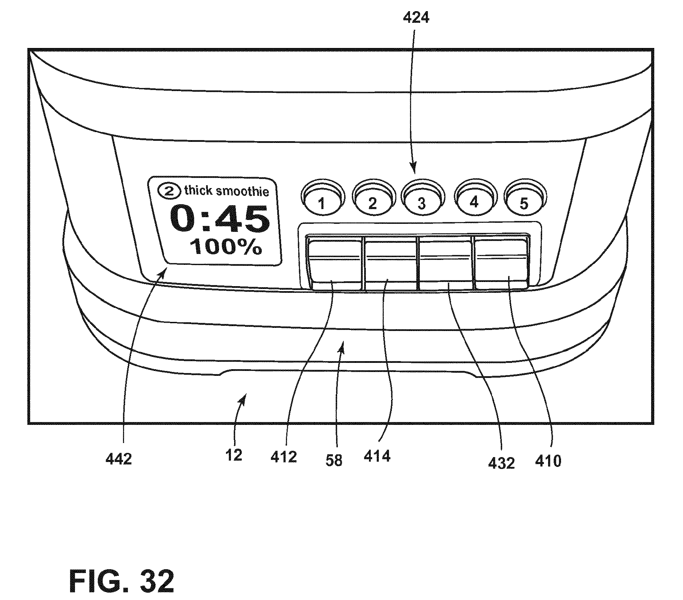

Referring now to the embodiments illustrated in FIGS. 30-32, the appliance control 58 of the food processing appliance 10 can include various control features that can include, but are not limited to, switches, toggles, dials, buttons, various touch screens including resistive touch screens, capacitive touch screens, surface acoustic wave touch screens, infrared touch screens, among others, multi-part dials/rings, and combinations thereof, and other similar control mechanisms. These various control mechanisms can be incorporated within the appliance control 58 to operate various functions of the food processing appliance 10 that can include, but are not limited to, a start-stop control 410 that can be used to engage and disengage the motor 16 of the food processing appliance 10. A variable pulse control 412 can be included, where the variable pulse control 412 can include a plurality of pulse speeds that can be controlled by moving the variable pulse control 412 into any one of a plurality of pulse positions. A speed control 414 can be included, where the speed control 414 can be a rotatable knob 416, rotatable bezel 418, or an operable lever, switch, or other control, that can be used to select a desired motor speed for operating various functions of the food processing appliance 10. It is contemplated that the speed control 414 can include various speed indicia 420 that can be disposed upon either the appliance control 58 itself or adjacent to the appliance control 58 on a portion of the housing 12 to communicate to the user which speed has been selected. The various speed indicia 420 can include numbers, symbolic indicia, and other graphics to communicate the selected speed of the motor 16. Additionally, the speed control 414 can operate various alternate functions of the food processing appliance 10. These alternate functions can include, but are not limited to, a cleaning function 422, various food processing functions that can include, but are not limited to, slicing, a smoothie function, a soup function, iced drink function, juicer function, various ice manipulating functions, such as chopping, shredding, crushing, and other various food processing functions that can be performed by the food processing appliance 10. The various processing functions can also include processing programs that can be engaged through the use of a program interface 424. According to the various embodiments, the speed control 414 for the food processing appliance 10 can include a simplified control that implements large incremental functions, such as high, medium, low and similar incremental speeds.

Referring again to the embodiments illustrated in FIGS. 30-32, the various aspects of the appliance control 58 can incorporate lighting mechanisms 430 to provide alternative methods of communicating to the user which of the various parameters the user has selected. By way of example, and not limitation, the appliance control 58 can include a timer function and associated timer control 432 for preselecting the amount of time that the food processing appliance 10 is to operate before either automatically shutting off or sounding an alarm for the user to shut off the food processing appliance 10 manually.

In the various embodiments, the lighting mechanism 430 can be placed in communication with the timer control 432 where various indicia of the timer control 432 can be illuminated as the timer counts down. Accordingly, when the timer control 432 is activated for a preselected time, the preselected time indicia 434 is illuminated. As the timer counts down, other timer indicia on portions of the timer control 432 become illuminated in order to communicate to the user the time remaining for the performance of the selected food processing function. It is contemplated that the timer control 432 can be rotated or otherwise manipulated to set the preselected time and then the timer control 432 automatically rotates relative to the lighting mechanism 430 such that the lighting mechanism 430 is stationary and the timer control 432 rotates or operates relative to the lighting mechanism 430. It is also contemplated that the lighting mechanism 430 is rotated by the user relative to a substantially stationary timer indicia, such that the lighting mechanism 430 rotates within the timer control 432 to illuminate the various timer indicia as the timer control 432 counts down.

According to various embodiments, the increments of the timer indicia of the countdown timer can include seconds, minutes, hours and combinations thereof such that a single timer control 432 can be adjusted to set small amounts of time of less than a minute, to mid-range amounts of time such as a few minutes, to large amount of time along the order of an hour or more.

According to the various embodiments, multiple controls can be included within a single rotatable knob 416, where the rotatable knob 416 can include a central knob 440 and various rotatable bezels 418 that can extend around and operate about the central knob 440. By way of example, and not limitation, the central knob 440 can control the processing speed and an outer rotatable bezel 418 can act as the timer control 432 of the food processing appliance 10. Additional rotatable bezels 418 can be included within the rotatable knob 416 to control additional functional aspects of the food processing appliance 10. Alternatively, multiple levers, buttons, switches, and other user interface features can be implemented within the appliance control 58 for operating the various functional features of the food processing appliance 10.

According to the various embodiments, the appliance control 58 can be free of knobs and can incorporate various buttons and switches for operating the various portions of the food processing appliance 10. It is also contemplated that various embodiments of the food processing appliance 10 can include a control display 442 that communicates to the user various functions and parameters of the food processing appliance 10 during operation. According to various embodiments, the control display 442 can include the countdown timer, a percentage completion of the selected food processing function, an indicator communicating the selected food processing function, a speed indicator, and other various communicative information. It is also contemplated that the control display 442 can serve to communicate to the user various error messages or status messages of the food processing appliance 10 during operation. Such messages can include, but are not limited to, an obstruction indicator, a motor strain indicator, various maintenance messages, and other similar status information of the food processing appliance 10. It is also contemplated that the control display 442 can be disposed within one of the touch screens, as described above.

According to the various embodiments, the appliance control 58 can include various surface finishes that can serve to either blend in or stand out from the surface finish of the surrounding portion of the food processing appliance 10. Such finishes can include, but are not limited to, chrome, brushed finishes, similar metallic surface patterns, gloss finish, semi-gloss finish, matte finish, any one of a plurality of colors, and other similar finishes. Additionally, the various lighting mechanisms 430 and the communicative features of the control display 442 can include various colors and light intensities that can both communicate information and also provide aesthetic details for the food processing appliance 10. It is also contemplated that the food processing appliance 10 can include various auditory feedback or signals to communicate to the user various status information of the food processing appliance 10.

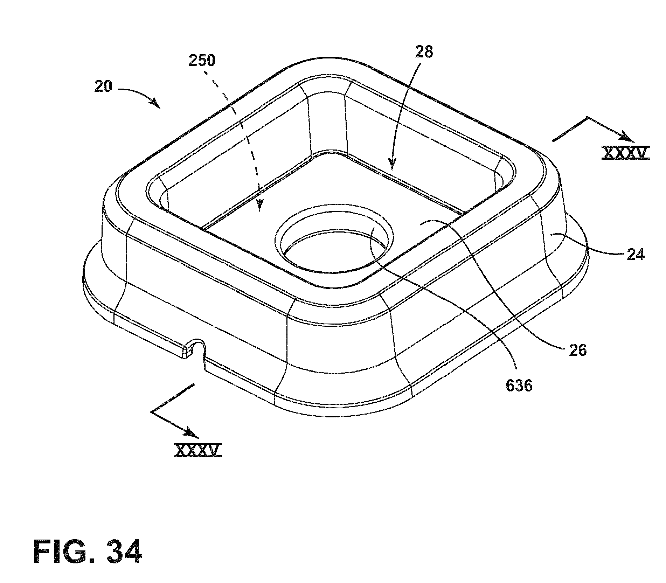

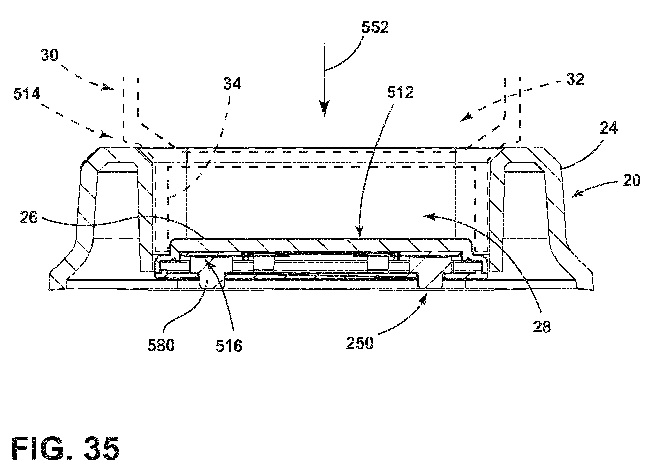

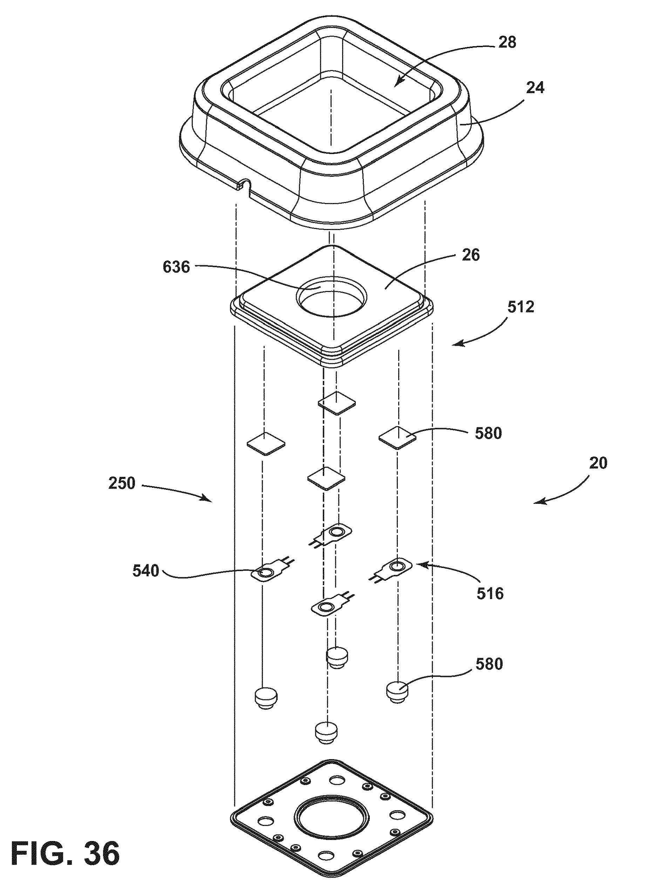

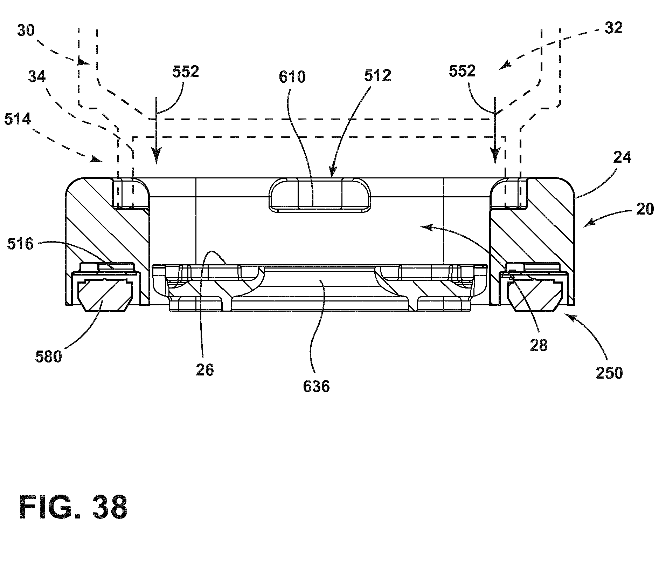

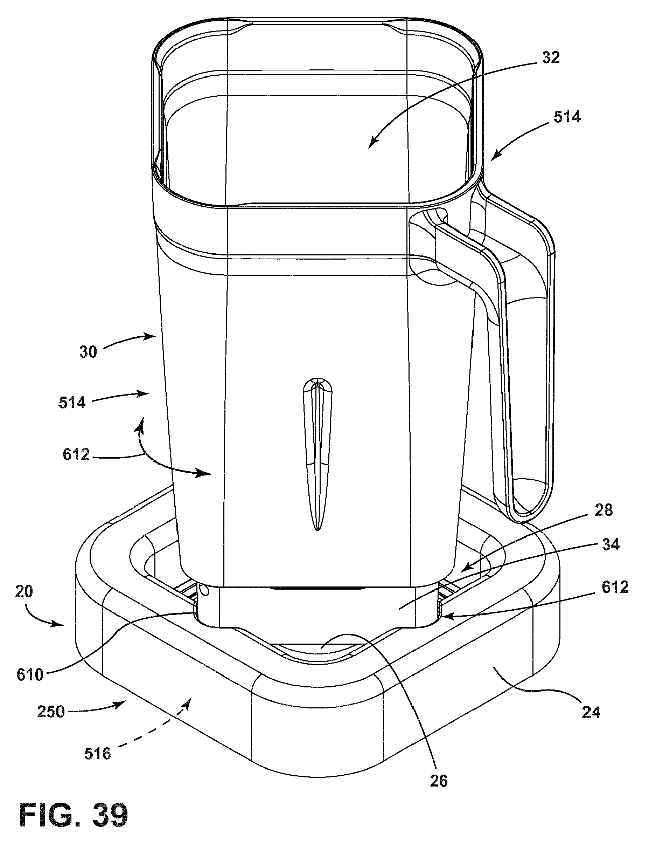

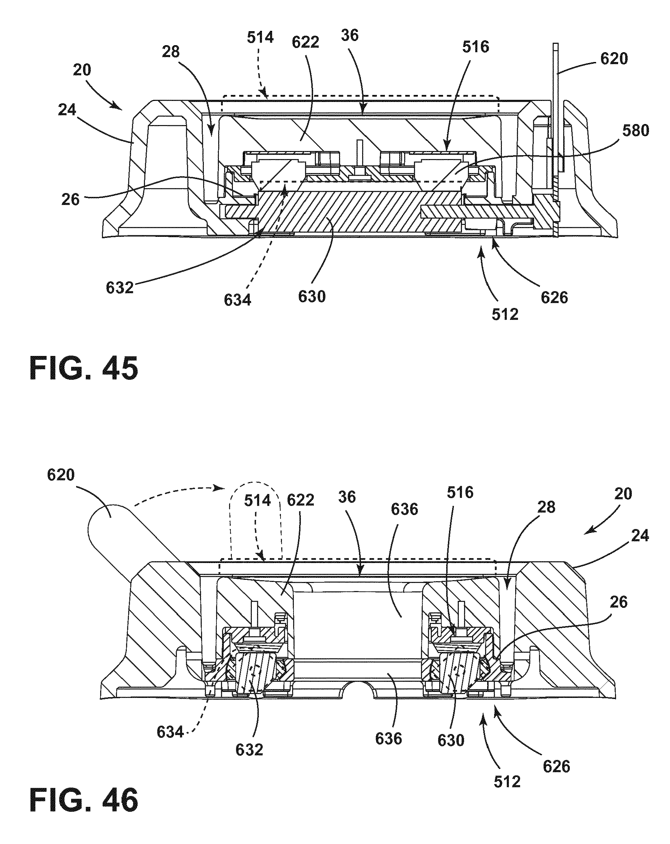

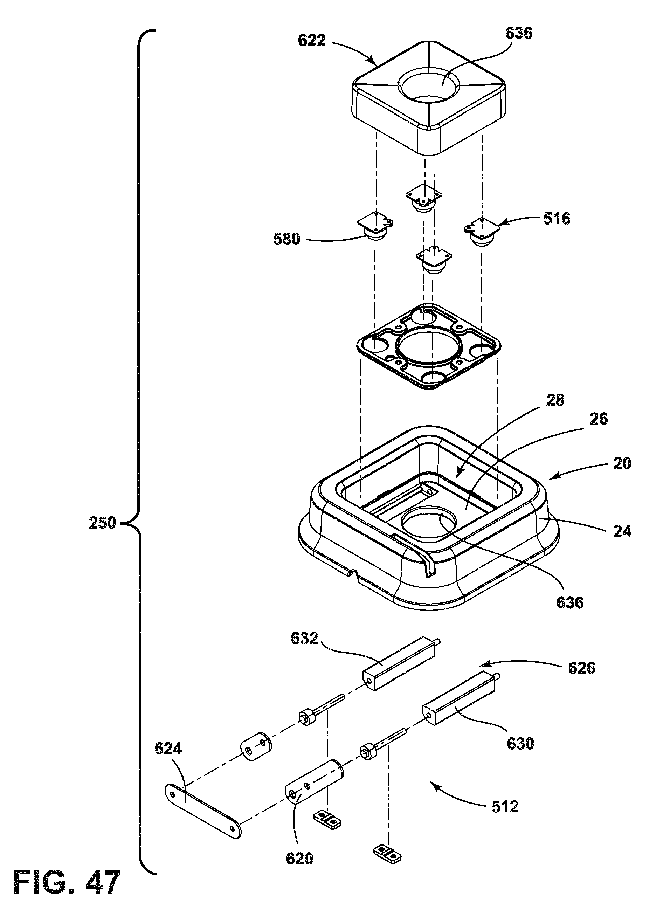

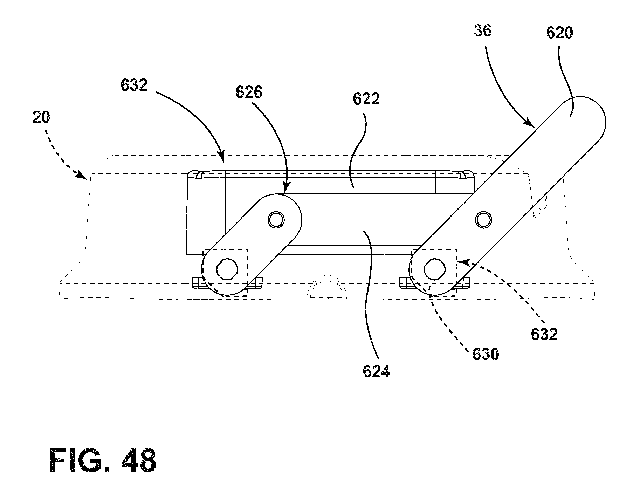

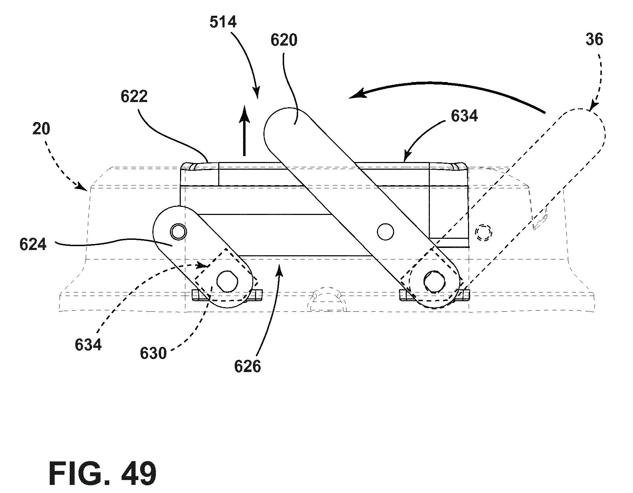

Referring now to FIGS. 34-49, various aspects of a weight scale 250 are exemplified. It is contemplated that the aspects of the weight scale 250 disclosed herein can be used for various kitchen appliances 510 that can include, but are not limited to, blenders, mixers, food processors, cooking appliances, refrigerating appliances, and other similar residential and/or commercial kitchen appliances.

As exemplified in FIGS. 1 and 33-49, a kitchen appliance 510 can include a housing 12 and a container seat 20 disposed proximate an upper portion 22 of the housing 12. A container 30 defining a processing chamber 32 can include a base 34 that matingly engages the container seat 20. A weight scale 250 is disposed within the container seat 20, wherein the engagement of the container 30 with a portion of the container seat 20 places the container 30 in communication with the weight scale 250. Accordingly to various embodiments, the weight scale 250 can include a scale engagement mechanism 512. It is contemplated that the scale engagement mechanism 512 selectively separates a weighing position 514 of the container 30 from the processing position 36 of the container 30. In the processing position 36, the weight scale 250 can be in a deactivated state 592, be idle, or otherwise not in use when the container 30 is in the processing position 36. According to the various embodiments, the scale engagement mechanism 512 can include an operable portion of the container seat 20 that activates and deactivates the weight scale 250 disposed within the container seat 20. It is also contemplated that the scale engagement mechanism 512 can include a predetermined position of the container 30 relative to the container seat 20 for defining the weighing position 514 and the processing position 36. Details as to the various scale engagement mechanisms 512 will be described in greater detail below.

Referring again to FIGS. 34-49, the container seat 20 can include the perimetrical collar wall 24 and a lower pad 26 that cooperate to define the collar recess 28. A rotational coupler 14, such as in the case of a blender, food processing appliance 10 or other blending/mixing device can be disposed within a shaft opening 636 of the lower pad 26 in an operable communication with the collar recess 28. It is contemplated that an electrical sensor 516 of the weight scale 250 can be disposed within various portions of the container seat 20. Various electrical sensors 516 can be disposed below the lower pad 26 of the container seat 20. It is also contemplated that the various electrical sensors 516 of the weight scale 250 can be disposed within the perimetrical collar wall 24 of the container seat 20. In the various embodiments of the weight scale 250, it is contemplated that the lower pad 26 of the container seat 20 is separated from the perimetrical collar wall 24 such that the lower pad 26 and the perimetrical collar wall 24 of the container seat 20 can operate independently of one another in a generally vertical direction. Additionally, the container seat 20 containing the weight scale 250 can be secured to the upper portion 22 of the housing 12 to prevent rotation or other movement of the container seat 20 and/or the weight scale 250 relative to the housing 23 during operation.

Referring now to FIGS. 34-36, the container seat 20 can include the perimetrical collar wall 24 that extends around a separate lower pad 26 of the container seat 20. Various electrical sensors 516 can be disposed below the lower pad 26, such that when the container 30 is disposed within the collar recess 28, the container 30 can alternatively define the weighing position 514 and the processing position 36 of the container 30. In such an embodiment, it is contemplated that activation of a processing function of the appliance 510 can serve to define a deactivated state 592 of the weight scale 250, or render the weight scale 250 idle, such that movement of the various mechanisms of the appliance 510 do not affect the calibration, operation, or other functioning state of the weight scale 250. When the various processing functions of the appliance 510 are deactivated, the weight scale 250 can define an activated state 594 by being automatically engaged or being engaged through activation of a user interface 530.

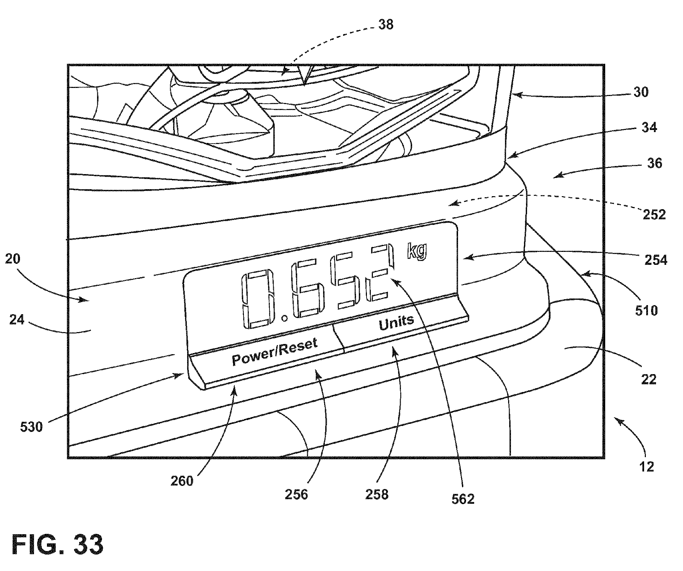

Referring again to FIGS. 34-36, the various electrical sensors 516 of the weight scale 250 can include any one or more of various electrical sensors 516 that can include, but are not limited to, a piezoelectric sensor 540, a strain gauge 542, electrical sensors 516 incorporating a Wheatstone bridge or similar circuit configuration, combinations thereof, and other similar electrical sensors 516. It is contemplated that these various electrical sensors 516 of the weight scale 250 can be in selective communication with an electrical current 544. When the container 30 is in communication with the weight scale 250, such as in the weighing position 514, a deflecting portion 550 of the electrical sensor 516 receives a downward force 552 from a container 30 and deflects to a deflected position 554. Each deflected position 554 of the plurality of deflected positions 554 defines a modification of the electrical current 544. This modification of electrical current 544 defines a modified electrical output 558 that corresponds to the downward force 552. It is contemplated that the modified electrical output 558 is in the form of a voltage that is delivered to a processor 560, where the amount of voltage corresponds to a downward force 552 exerted upon each electrical sensor 516. The processor 560 then converts the modified electrical output 558 delivered from the electrical sensor 516 to a user interface 530 in the form of a graphical indicia 562 (see FIG. 33) that is communicated to the user to relay the weight of the container 30 and/or the contents of the container 30. It is contemplated that the modified electrical output 558 delivered from the electrical sensor 516 to the processor 560 can also be a voltage generated by the electrical sensor 516, such as in the case of a piezoelectric sensor 540. The modified output voltage can also be a change, through a strain gauge 542 or other resistor, of an input electrical current 544 that is modified through operation of the electrical sensor 516 and delivered to the processor 560 to communicate the downward force 552 of the container 30 to the user.

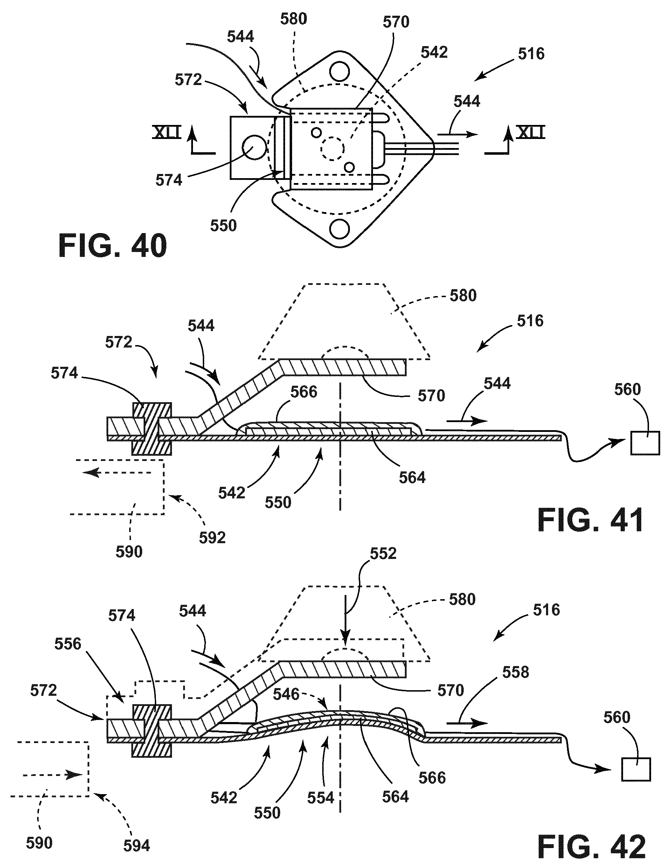

Referring again to FIGS. 40-41, the deflecting portion 550 of the electrical sensor 516 can include a strain gauge 542 that applies a corresponding electrical resistance 546 to an electrical current 544 when the deflecting portion 550 defines any one of the deflected positions 554. The strain gauge 542 can take the form of a thin metallic film 564 or sheet that is covered by a protective material 566. The metallic film 564 can include copper, or other similar conductive material. The protective material 566 can be a dried adhesive, epoxy, polymer, combinations thereof or other similar protective covering. As the downward force 552 is applied to the strain gauge 542, the strain gauge 542 deflects and varies the corresponding electrical resistance 546 that is applied to the input electrical current 544. While a downward deflection is illustrated, other directions of deflection are also contemplated. This corresponding electrical resistance 546 modifies the input electrical current 544 to generate the modified electrical output 558 that corresponds to the downward force 552 applied by the container 30. As a greater downward force 552 is applied to the strain gauge 542, a greater deflection of the strain gauge 542 corresponds to a greater corresponding electrical resistance 546 and, in turn, a modified weight readout communicated to the user. It is contemplated that the strain gauge 542 can take the form of one leg of a Wheatstone bridge.

Referring again to FIGS. 40-42, the electrical sensor 516 can include a rigid portion 570 that engages with the deflecting portion 550, such as the strain gauge 542. The downward force 552 of the container 30 is applied to the rigid portion 570 that is positioned above the deflecting portion 550. In this manner, the downward force 552 of the container 30 is transferred through the rigid portion 570 and to the deflecting portion 550 to define the deflected position 554 of the electrical sensor 516. It is contemplated that the use of the rigid portion 570 can at least partially protect the deflecting portion 550 such that little, if any, of the downward force 552 from the container 30 is applied directly to the deflecting portion 550. Rather, the rigid portion 570 can receive the downward force 552 and can be moved vertically such that the vertical movement of the rigid portion 570 can be transferred to the deflecting portion 550 to define the various deflected positions 554 thereof and, in turn, the corresponding electrical resistance 546. It is contemplated that the rigid portion 570 and the deflecting portion 550 can be connected proximate weight transfer end 572 of the rigid portion 570 by a rivet 574. Various other connecting mechanisms are contemplated where such connecting mechanisms can include, but are not limited to, welding, adhesives, mechanical fasteners, combinations thereof, and other fastening mechanisms. A protective foot 580, in the form of a rubber seat or other resilient member can also be positioned above the rigid portion 570 and/or below the deflecting portion 550 to further protect the deflecting portion 550, while transferring all of the downward force 552 to the deflecting portion 550.

Referring again to FIGS. 40-42, the scale engagement mechanism 512 of the container seat 20 can include a blocking member 590 that is operated into selective engagement with the deflecting portion 550 to define deactivated and activated states 592, 594 of the electrical sensor 516. The deactivated state 592 of the electrical sensor 516 is defined by the deflecting portion 550 being substantially free of deflection when the downward force 552 is applied thereto. In this manner, the deactivated state 592 can correspond to the processing position 36 of the appliance 510. Alternatively, the scale engagement mechanism 512 can be selectively operated to the activated state 594 to move the blocking member 590 to be free of engagement or substantially free of engagement with the deflecting portion 550, such that the deflecting portion 550 can define the various deflected positions 554 of the electrical sensor 516. It is contemplated that the blocking member 590 can be moved into engagement with the deflecting portion 550, either through a dedicated control, or through a separate control that defines the processing position 36 of the appliance 510.

By way of example, and not limitation, when the appliance 510 is placed in a processing position 36, such as when a motor 16 is engaged, the activation of the motor 16 can serve to automatically move the blocking member 590 into selective engagement with the deflecting portion 550 to define the deactivated state 592. Accordingly, vibrations caused by the motor 16, a blade, or other operable portion of the appliance 510 do not cause an overdeflection or excessive vibration of the deflecting portion 550. Such overdeflection, excessive vibration, or other similar force can result in a loss of calibration or damage to the deflecting portion 550 of the electrical sensor 516. The blocking member 590 can serve to limit the movement of the deflecting portion 550 such that minimal deflection, or no deflection, of the deflecting portion 550 is permitted.

Referring again to FIGS. 40-42, when the appliance 510 is moved to the weighing position 514, the blocking member 590 can be moved out of engagement with the deflecting portion 550 to define the activated state 594. The deflecting portion 550 can then be operated in the weighing position 514 to define the plurality of deflected positions 554 of the electrical sensor 516. According to various embodiments, the blocking member 590 in the activated position can also be moved to a safety position proximate the deflecting portion 550 such that the deflecting portion 550 can define all of the deflected positions 554. However, in the safety position, overdeflection of the deflecting portion 550 that may result in damage to the deflecting portion 550 of the electrical sensor 516 can be substantially prevented. Such a safety position may be necessary where a container 30 of the appliance 510 is overloaded beyond the predetermined tolerances of the appliance 510, where such overloading may result in damage to the various electrical sensors 516 of the appliance 510. The safety position can result in an error message being communicated to the user via the graphical indicia 562.

According to the various embodiments, the blocking member 590 can be in the form of a plastic, rubber, polymer, or other resilient-type material that can be placed in engagement, or near engagement, with the rivet 574 that connects the rigid portion 570 with the deflecting portion 550. Accordingly, the engagement of the rivet 574 with the blocking member 590 can serve to define the deactivated state 592 of the electrical sensor 516 as well as the activated state 594 and safety positions.

According to the various embodiments, it is contemplated that the weight scale 250 of the container seat 20 can include a single electrical sensor 516 that receives all of the downward force 552 of the container 30 for measuring the weight of the contents of the container 30. It is also contemplated that the container seat 20 can include a plurality of electrical sensors 516 of the weight scale 250. In such an embodiment, the downward force 552 of the container 30 can be distributed among various electrical sensors 516 of the weight scale 250 within the container seat 20. As discussed above, the various electrical sensors 516 can be disposed below the lower pad 26 of the container seat 20 or can be disposed within a portion of the perimetrical collar wall 24 of the container seat 20.

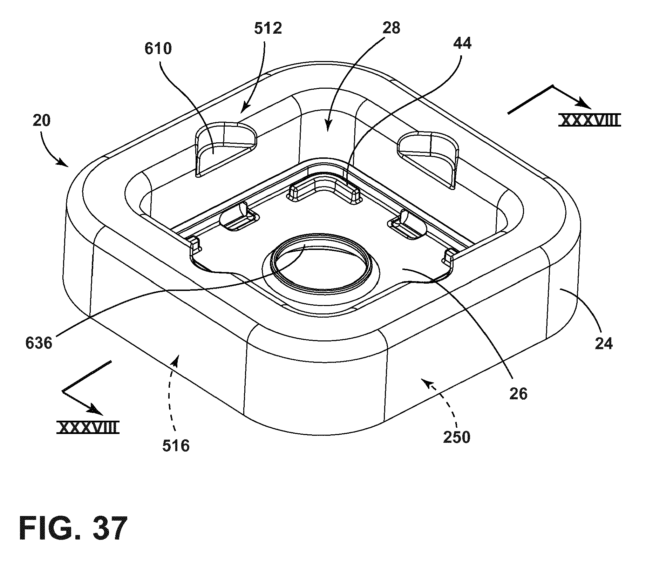

Referring now to FIGS. 37-39, the container seat 20 can include one or more scale recesses 610 that are defined within the perimetrical collar wall 24 of the container seat 20. The scale recesses 610 can define the weighing position 514 of the container 30 such that the container 30 can be rotated at a predetermined angle 612, such as 45°, and rest above the lower pad 26. In such an embodiment, the base 34 of the container 30, which can be generally rectangular in shape, can be oriented such that it does not enter fully into the collar recess 28. Rather, the base 34 of the container 30 seats within the scale recesses 610 defined within the perimetrical collar wall 24 to define the weighing position 514. In this position, the base 34 of the container 30 is free of engagement with the lower pad 26 of the container seat 20 and the weight of the container 30 is fully received only by the perimetrical collar wall 24. In such an embodiment, it is contemplated that the electrical sensors 516 of the weight scale 250 are disposed only within the perimetrical collar wall 24 such that the downward force 552 of the container 30 is transferred into the perimetrical collar wall 24 and directly into the various electrical sensors 516 disposed therein. Once weighing of the contents of the container 30 is complete, the container 30 can then be rotated the predetermined angle 612, such as 45°, so that the base 34 fully seats within the collar recess 28 and rests upon the lower pad 26 of the container seat 20.

As discussed above, the various electrical sensors 516 of the appliance 510 can include a piezoelectric sensor 540, a strain gauge 542, a Wheatstone bridge, combinations thereof, and other similar electrical sensors 516. Additionally, while the angle of 45° is exemplified herein, alternate angles for rotating the container 30 to define the weighing position 514 and the processing position 36 are contemplated. The angle used to define the weighing position 514 and the processing position 36 can depend on the shape of the base 34 of the container 30, the shape of the container seat 20, and other factors.

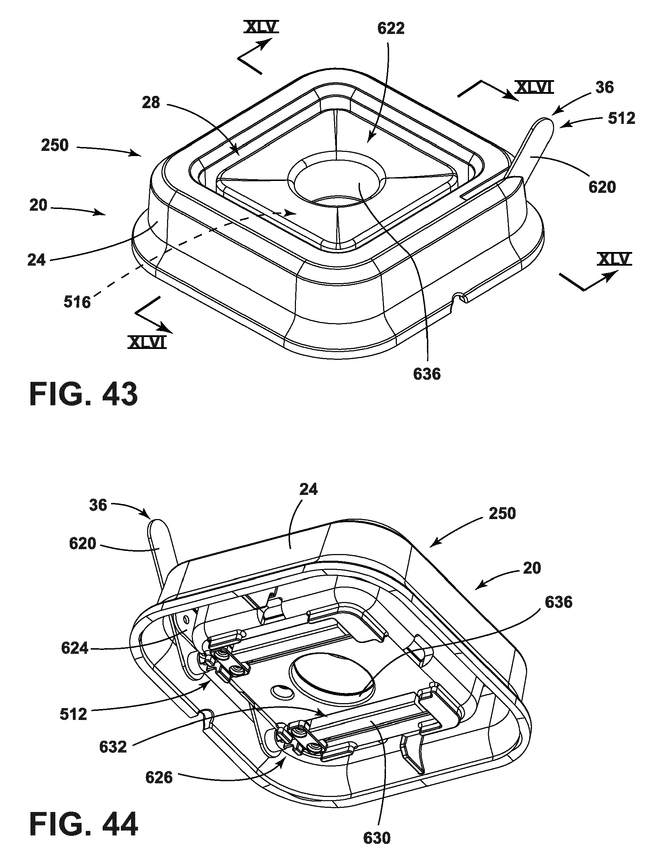

Referring now to FIGS. 43-49, the scale engagement mechanism 512 can include a scale lever 620 that can extend outward from the container seat 20. It is contemplated that the scale lever 620 can be operated to manipulate a portion of the container seat 20 to define the weighing position 514 and the processing position 36. According to the various embodiments, the scale lever 620 can be used to vertically operate a scale housing 622 disposed within a portion of the container seat 20. It is contemplated that the scale housing 622 can include the various electrical sensors 516 that can be vertically operated to engage and receive the downward force 552 of the container 30 such that the electrical sensors 516 can be placed in communication with the container 30. It is also contemplated that the scale lever 620 can include various linkages 624, such as a four-bar linkage that rotationally operates a lifting mechanism 626 disposed proximate the scale housing 622.

Referring again to FIGS. 44-49, the lifting mechanism 626 can include various rollers 630 that vary in height depending upon the position of the scale lever 620. By way of example, and not limitation, when the scale lever 620 is moved into the processing position 36, the lifting mechanism 626 can rotate the rollers 630 to a rotational position where the rollers 630 have a low vertical profile 632 such that the scale housing 622 is moved downward and out of engagement with a base 34 of the container 30. When the scale lever 620 is moved into the weighing position 514, the rollers 630 are rotated about various rotational axes to a rotational position having a higher vertical profile 634 such that the higher vertical profile 634 biases the scale housing 622 in an upward direction and into engagement with a base 34 of the container 30 to define the weighing position 514. The upward movement of the scale housing 622 can lift the container 30 in an upward direction such that the container 30 rests primarily upon the scale housing 622 to direct all or substantially all of the downward force 552 of the container 30 into the scale housing 622. In this manner, this downward force 552 can be measured by the electrical sensors 516 within the scale housing 622. Movement of the scale lever 620 back to the processing position 36, the rollers 630 are rotated back to define the low vertical profile 632 so the scale housing 622 is lowered and moved substantially out of engagement with the base 34 of the container 30.

According to the various embodiments, the movement of the scale lever 620 between the weighing position 514 and the processing position 36 can serve to alternatively activate and deactivate the processing functions of the appliance 510 and the weighing functions of the appliance 510. In this manner, when the scale lever 620 is moved to the processing position 36, the weighing functions of the appliance 510 can be in the deactivate state 592 since the scale housing 622 is free of or substantially free of engagement with the base 34 of the container 30. Alternatively, when the scale lever 620 is moved to the weighing position 514, the weight scale 250 is in the activated state 594 and the processing functions of the various motorized or electrical mechanisms of the appliance 510 remain idle, are deactivated, or are otherwise inoperable, to prevent operation of these functions during use of the weight scale 250. This block-out function of the appliance 510 can be manipulated through operation of the scale lever 620, or other user interface 530 and can serve to prevent damage to the various electrical sensors 516 of the processing appliance 510.

According to various embodiments, it is contemplated that instead of vertically operating the weight scale 250 of the appliance 510, the container 30 can be vertically operated to define the processing and weighing positions 36, 514 of the appliance 510. In this manner, an interface mechanism such as a lever, dial, knob, or other similar interface can be operated to vertically operate the container 30 between the processing and weighing positions 36, 514 of the appliance 510. As with other embodiments, manipulation of the container 30 to the processing position 36 serves to block out or otherwise protect the functions of weight scale 250 of the appliance 510. Conversely, movement of the container 30 to a weighing position 514 will serve to block out processing functions of the appliance 510 to prevent simultaneous operation of the processing functions and the weight scale 250 of the appliance 510 to prevent damage to the electrical sensors 516.

Referring again to FIG. 33, it is contemplated that the various electrical sensors 516 can be placed in communication with the user interface 530 of the appliance 510 such that the downward force 552 exerted upon the electrical sensors 516 can result in a modified electrical output 558 that is delivered to the processor 560 and then communicated to the user via the weight scale display 254. It is contemplated that the various user interface functions described above that include the calibrating function 256, units functions 258 and the weight scale power control 260 can serve to adjust the output reading of the weight scale display 254.

According to the various embodiments, various other block-out mechanisms of the weight scale 250 can be implemented to prevent damage to the various electrical sensors 516. Such block-out functions can include, but are not limited to, magnets that sense the position of the container 30 relative to the electrical sensors 516, automatic operation of the electrical sensors 516 and/or the container 30 based upon a selected function of the appliance 510, a neutral position of the sensor such that the electrical functions of the sensor are free to vibrate, the use of dampers to minimize the force of vibration against the various electrical sensors 516, combinations thereof and other similar block-out mechanisms. It is also contemplated the the weight scale 250 can be utilized as an interlock for the appliance 510, wherein the processing functions of the appliance 510 can only be activated when the weight scale 250 senses some downward force 552 applied by the container 30.

According to the various embodiments, the container seat 20 having the weight scale 250 can be a component manufactured as part of the kitchen appliance 510. The container seat 20 having the weight scale 250 can also be a separate after-market component that replaces a manufactured container seat 20 having no weight scale 250. It is also contemplated that the weight scale 250 can be disposed in other portions of the appliance 510. By way of example, and not limitation, the weight scale 250 can be installed in the lid 132 such that the container 30 can be placed on the lid 132 where the electrical sensors 516 are positioned in the lid 132. The lid 132 can define the weighing position 514 by being placed between the container 30 and the container seat 20. The lid 132 can also be placed on a countertop or other flat surface. The downward force 552 can be communicated from the weight scale 250 in the lid 132 to the user interface 530 wirelessly or through a direct wired connection.

Referring again to FIGS. 9, 10 and 34-49, the appliance 510 incorporating the various aspects of the weight scale 250 can be a food processing appliance 10, where the food processing appliance 10 includes a blade assembly 38 having a processing blade 40 with a blade coupler 42. It is contemplated that the blade coupler 42 can be in operable communication with the processing blade 40 and the base 34 of the container 30. The rotational coupler 14 that extends from the housing 12 can extend through a shaft opening 636 in the lower pad 26 and into a portion of the container seat 20. In this manner, the rotational coupler 14 is in communication with the motor 16. The processing position 36 of the food processing appliance 10 is further defined by the blade coupler 42 being in communication with a rotational coupler 14 such that the motor 16 is in operable communication with a processing blade 40 disposed within a processing chamber 32. As discussed above, when the food processing appliance 10 is moved to the weighing position 514, the various processing functions of the appliance 510 are in an idle state or otherwise deactivated to prevent simultaneous operation of the weighing functions and the processing functions to prevent substantial damage to the electrical sensors 516.

## Claims

1. A kitchen appliance (510) comprising:
a housing (12);
a container seat (20) disposed proximate an upper portion (22) of the housing (12);
a container (30) defining a processing chamber (32), the container (30) having a base (34) that matingly engages the container seat (20); and
a weight scale (250) disposed within the container seat (20), wherein engagement of the container (30) with a portion of the container seat (20) places the container (30) in communication with the weight scale (250).

2. The kitchen appliance (510) of claim 1, wherein the weight scale (250) includes a scale engagement mechanism (512), wherein the scale engagement mechanism (512) selectively separates a weighing position (514) of the container (30) from a processing position (36) of the container (30), wherein the weight scale (250) is in an idle state in the processing position (36).

3. The kitchen appliance (510) of any one or more of claims 1-2, wherein the weight scale (250) includes an electrical sensor (516) that is in selective communication with an electrical current (544), wherein when the container (30) is in communication with the weight scale (250), a deflecting portion (550) of the electrical sensor (516) receives a downward force (552) from the container (30) to define a deflected position (554) of a plurality of deflected positions (554) of the deflecting portion (550), and wherein the deflected position (554) defines a modification of the electrical current (544) to define a modified electrical output (558) that corresponds to the downward force (552).

4. The kitchen appliance (510) of claim 3, wherein the deflecting portion (550) includes a strain gauge (542) that applies a resistance to the electrical current (544) when the deflecting portion (550) is in one of the plurality of deflected positions (554).

5. The kitchen appliance (510) of claim 4, wherein the electrical sensor (516) includes a rigid portion (570) that engages the deflecting portion (550), wherein the downward force (552) is transferred through the rigid portion (570) and to the deflecting portion (550) to define the deflected position (554).

6. The kitchen appliance (510) of claim 5, wherein the rigid portion (570) and the deflecting portion (550) are connected proximate an end of the rigid portion (570) by a rivet.

7. The kitchen appliance (510) of any one or more of claims 3-6, wherein the weight scale (250) includes a scale engagement mechanism (512), wherein the scale engagement mechanism (512) operates a blocking member (590) into selective engagement with the deflecting portion (550) to define a deactivated state (592) of the electrical sensor (516), wherein the deactivated state (592) is defined by the deflecting portion (550) being substantially free of deflection when the downward force (552) is applied thereto, and wherein the scale engagement mechanism (512) alternatively and selectively operates the blocking member (590) to be free of engagement with the deflecting portion (550).

8. The kitchen appliance (510) of any one or more of claims 3-7, wherein the electrical sensor (516) is a piezoelectric sensor (540).

9. The kitchen appliance (510) of any one or more of claims 1-8, wherein the weight scale (250) includes a plurality of electrical sensors (516) that cooperate to receive the downward force (552) from the container (30).

10. The kitchen appliance (510) of any one or more of claims 2-9, further comprising:
a blade assembly (38) having a processing blade (40) and a blade coupler (42), wherein the blade coupler (42) is in operable communication with the processing blade (40) and the base (34) of the container (30);
a rotational coupler (14) that extends from the housing (12) and into the container seat (20), wherein the rotational coupler (14) is in communication with a motor (16), and wherein the processing position (36) is further defined by the blade coupler (42) in communication with the rotational coupler (14) such that the motor (16) is in operable communication with the processing blade (40) disposed within the processing chamber (32).

11. The kitchen appliance (510) of claim 10, wherein the container seat (20) includes a perimetrical collar wall (24) and a lower pad (26) that define a collar recess (28), the rotational coupler (14) being disposed within the lower pad (26) and in operable communication with the collar recess (28), and wherein an electrical sensor (516) of the weight scale (250) is disposed within the perimetrical collar wall (24).

12. The kitchen appliance (510) of any one or more of claims 3-11, wherein the electrical sensor (516) includes a strain gauge (542).

13. The kitchen appliance (510) of any one or more of claims 1-10, wherein the container seat (20) includes a perimetrical collar wall (24) and a lower pad (26) that cooperate to define a collar recess (28) for receiving the base (34) of the container (30), wherein the lower pad (26) is separated from the perimetrical collar wall (24) such that the lower pad (26) moves independently from the perimetrical collar wall (24).

14. The kitchen appliance (510) of any one or more of claims 3-10 and 13, wherein the electrical sensors (516) are disposed under the lower pad (26).

15. The kitchen appliance (510) of any one or more of claims 2-14, wherein the weighing position (514) of the container (30) is defined by an angular position of the container (30) relative to the container seat (20).
